# EUROPEAN PATENT APPLICATION

(11) **EP 4 773 721 A1**
(43) Date of publication of application: **08.07.2026**
(21) Application number: 24876217.1
(22) Date of filing: 08.08.2024
(51) Int. Cl.: H04W 76/10

(54) **DATA TRANSMISSION METHOD AND ELECTRONIC DEVICE**

(30) Priority: 12.10.2023 CN 202311315142
(71) Applicant: Honor Device Co., Ltd., Shenzhen, Guangdong 518040 (CN)
(72) Inventor: WANG, Rui, Shenzhen, Guangdong 518040 (CN)
(74) Representative: Gill Jennings & Every LLP
(86) International application number: PCT/CN2024/110788
(87) International publication number: WO 2025/077397

(57) **Abstract**

This application provides a data transmission method and an electronic device. The method includes: A first device establishes a first signal connection with a first access point operating on a first channel. A second device establishes a second signal connection with a second access point operating on a second channel. The second device establishes a data connection with the first device in response to a data transmission request of the first device. The first device or the second device cuts off a signal connection on a different operating channel from the data connection, which can prevent the first device and the second device from being in a co-frequency and different-channel operating mode, thereby improving data transmission efficiency between electronic devices and enhancing terminal usage experience of a user. A path of the data connection includes any one of the following: a first signal connection and a third signal connection between the first access point and the second device; a Wi-Fi Direct connection between the first device and the second device; or a fourth signal connection between the first device and the second access point, and a second signal connection.

## Description

This application is based on and claims priority to Chinese Patent Application No. 202311315142.2, filed on October 12, 2023 and entitled "DATA TRANSMISSION METHOD AND ELECTRONIC DEVICE", which is incorporated herein by reference in its entirety.

### TECHNICAL FIELD

This application relates to the field of communications, and in particular, to a data transmission method and an electronic device.

### BACKGROUND

Wireless fidelity (Wireless Fidelity, Wi-Fi) Direct refers to a peer-to-peer (Peer-To-Peer, P2P) connection between Wi-Fi devices, that is, devices may be connected without using a wireless access point (Access Point, AP). Two electronic devices between which the Wi-Fi Direct is established are in a same channel in the same frequency.

During establishment of the Wi-Fi Direct, according to relevant regulations, an electronic device that does not have an indoor detection function (which is used to detect whether the electronic device is indoors) and a radar detection function (which is used to detect whether a radar signal exists in a channel) cannot use indoor channels (such as channels 36-48) and radar channels (such as channels 52-64) as operating channels for the Wi-Fi Direct. The indoor channel and the radar channel may be collectively referred to as restricted channels. Currently, most electronic devices do not have the indoor detection function and a radar channel detection function. Therefore, when Wi-Fi Direct is established between such electronic devices and an opposite terminal, a channel corresponding to the Wi-Fi Direct is inevitably an unrestricted channel. If such electronic devices are also connected to a wireless access point operating on a restricted channel, such an electronic device is in a co-frequency and different-channel operating mode. However, the electronic devices in the same frequency and different channels need to switch between two different channels during operation, resulting in degraded Internet access fluency of the electronic devices and reduced data transmission efficiency between the electronic devices, and then leading to poor user experience.

### SUMMARY

To resolve the foregoing technical problem, this application provides a data transmission method and an electronic device. The electronic device may determine an appropriate data transmission mode through network information of a wireless access point to which the electronic device is connected and network information of a wireless access point to which a peer electronic device is connected, to prevent two electronic devices from being in a co-frequency and different-channel operating mode when performing data transmission through Wi-Fi Direct, thereby improving data transmission efficiency between the electronic devices, and further enhancing terminal usage experience of a user.

According to a first aspect, this application provides a data transmission method. A first device accesses a first access point through a first signal connection, a second device accesses a second access point through a second signal connection, the first access point operates on a first channel, and the second access point operates on a second channel. The method includes: A first device sends a data transmission request to a second device in response to an interaction instruction. The data transmission request is used to request to establish a data connection with the second device, and is used to indicate that the first access point operates on the first channel. The second device establishes a data connection with the first device in response to the data transmission request, and the first device or the second device cuts off a signal connection on a different operating channel from the data connection. The data connection operates on a target channel. The target channel is a first channel or a second channel. A path of the data connection includes any one of a first communication path, a second communication path, and a third communication path. The first communication path includes the first signal connection and a third signal connection between the first access point and the second device. The second communication path is a Wi-Fi Direct connection between the first device and the second device. The third communication path is a fourth signal connection between the first device and the second access point, and a second signal connection.

In this embodiment of this application, when the second device establishes the data connection with the first device, the first device or the second device cuts off the signal connection on a different operating channel from the data connection, so that the first device and the second device can be prevented from establishing another connection on a different operating channel from the data connection while maintaining the data connection, thereby avoiding reduced data transmission efficiency between the first device and the second device as a result of the first device and the second device being in the co-frequency and different-channel operating mode. In addition, an appropriate path of data connection may further be adapted between the first device and the second device, thereby improving data transmission efficiency between electronic devices, and further enhancing terminal usage experience of the user.

According to the first aspect, that the second device establishes a data connection with the first device in response to the data transmission request, and the first device or the second device cuts off a signal connection on a different operating channel from the data connection includes: The second device determines, in response to the data transmission request, that a data transmission mode is a first Wi-Fi Direct transmission when the first channel is an unrestricted channel and the second channel is a restricted channel. The second device sends a first data transmission response to the first device based on the data transmission mode. The first data transmission response is used to indicate that the data transmission mode is the first Wi-Fi Direct transmission. The second device cuts off the second signal connection. The first device establishes Wi-Fi Direct with the second device in response to the first data transmission response, to serve as a path of the data connection, where the data connection operates on the first channel.

In this embodiment of this application, the second electronic device first determines an appropriate and efficient data transmission mode based on the first channel and the second channel. When the first channel is an unrestricted channel and the second channel is a restricted channel, a Wi-Fi Direct transmission operating on the unrestricted channel (the first channel) can be established between the first device and the second device. Therefore, the data transmission mode determined by the second device is the first Wi-Fi Direct transmission. The second device sends a data transmission response to the first device, to indicate that the data transmission mode is the first Wi-Fi Direct transmission. The second device cuts off the second signal connection, to prevent the data connection (the Wi-Fi Direct) of the second device from being on the first channel and an Internet connection being on the second channel after the Wi-Fi Direct with the first device is established, that is, to prevent the second device from being in the co-frequency and different-channel operating mode, so as to ensure that the first device and the second device may perform efficient data transmission based on the data connection.

According to the first aspect or any one implementation of the foregoing first aspect, before the second device cuts off the second signal connection, the method further includes: When the second device and the first device are configured with a unified authentication account, the second device obtains security authentication information of the first access point through a cloud platform corresponding to the unified authentication account. The security authentication information of the first access point in the cloud platform is uploaded by the first device.

In this embodiment of this application, the second device stores the security authentication information of the first access point in advance through the cloud platform corresponding to the unified authentication account, to facilitate establishment of a signal connection with the first access point in a subsequent process.

According to the first aspect or any one implementation of the foregoing first aspect, after the second device cuts off the second signal connection, the method further includes: The second device establishes a third signal connection with the first access point when the security authentication information of the first access point is pre-stored, where the second device accesses the Internet through the third signal connection.

In this embodiment of this application, since the data connection established between the first device and the second device operates on the first channel, after cutting off the signal connection with the second access point, the second device may establish the third signal connection with the first access point that also operates on the first channel, to access the Internet through the third signal connection. Since the data connection (the Wi-Fi Direct) and the Internet connection (a third signal connection) that are retained simultaneously by the second device both operate on the first channel, the second device can be prevented from being in the co-frequency and different-channel operating mode when performing data interaction with the first device.

According to the first aspect or any one implementation of the foregoing first aspect, after the second device cuts off the second signal connection, the method further includes: The second device modifies a locally stored routing table when the security authentication information of the first access point is not pre-stored, to access the Internet through the first device.

In this embodiment of this application, the second device does not store the security authentication information of the first access point, and the second device may be unable to access the first access point. Based on this, the second device may modify the locally stored routing table, to access the Internet through the first device. In this way, the second device can also access the Internet when being unable to connect to the first access point, and the second device may not be in the co-frequency and different-channel operating mode after the subsequent Wi-Fi Direct is established.

According to the first aspect or any one implementation of the foregoing first aspect, that the second device modifies the locally stored routing table when the security authentication information of the first access point is not pre-stored includes: The second device modifies a next-hop address of a default route in the locally stored routing table to an IP address of a network card where the Wi-Fi Direct is located in the first device.

In this embodiment of this application, the second device modifies the next-hop address of the default route in the locally stored routing table to the IP address of the network card where the Wi-Fi Direct is located in the first device, so that the second device may be on the first channel through the Internet connection of the first device, to ensure that the second device is not in the co-frequency and different-channel operating mode when establishing the Wi-Fi Direct with the first device.

According to the first aspect or any one implementation of the foregoing first aspect, after the second device cuts off the second signal connection, the method further includes: The second device establishes a Bluetooth wireless connection with the first device when the security authentication information of the first access point is not pre-stored. The second device obtains the security authentication information of the first access point from the first device through the Bluetooth wireless connection. The second device establishes a third signal connection with the second access point based on the security authentication information of the first access point.

In this embodiment of this application, the second device may obtain the security authentication information of the first access point through the Bluetooth wireless connection established by the first device, and then establish the third signal connection with the second access point, to access the Internet through the third signal connection. In addition, when the second device accesses the Internet through the third signal connection, the data connection (the Wi-Fi Direct) and the Internet connection (a third signal connection) that are retained simultaneously by the second device both operate on the first channel. Therefore, the second device can be prevented from being in the co-frequency and different-channel operating mode when performing data interaction with the first device.

According to the first aspect, that the second device establishes a data connection with the first device in response to the data transmission request, and the first device or the second device cuts off a signal connection on a different operating channel from the data connection further includes: The second device determines, in response to the data transmission request, that a data transmission mode is a second Wi-Fi Direct transmission when the first channel is a restricted channel and the second channel is an unrestricted channel. The second device sends a second data transmission response to the first device based on the data transmission mode. The second data transmission response is used to indicate that the data transmission mode is the second Wi-Fi Direct transmission. The first device establishes Wi-Fi Direct with the second device in response to the second data transmission response, to serve as a path of the data connection. In addition, the first device cuts off the first signal connection, where the data connection operates on the second channel.

In this embodiment of this application, the second electronic device first determines an appropriate and efficient data transmission mode based on the first channel and the second channel. When the first channel is a restricted channel and the second channel is an unrestricted channel, a Wi-Fi Direct transmission operating on the unrestricted channel (the second channel) can be established between the first device and the second device. Therefore, the data transmission mode determined by the second device is the second Wi-Fi Direct transmission. The second device sends a data transmission response to the first device, to indicate that the data transmission mode is the second Wi-Fi Direct transmission. The first device cuts off the first signal connection, to prevent the data connection (the Wi-Fi Direct) of the first device from being on the second channel and an Internet connection being on the first channel after the Wi-Fi Direct with the second device is established, that is, to prevent the first device from being in the co-frequency and different-channel operating mode, so as to ensure that the first device and the second device may perform efficient data transmission based on the data connection.

According to the first aspect or any one implementation of the foregoing first aspect, before the first device cuts off the first signal connection, the method further includes: When the first device and the second device are configured with a unified authentication account, the first device obtains security authentication information of the second access point through a cloud platform corresponding to the unified authentication account. The security authentication information of the second access point in the cloud platform is uploaded by the second device.

In this embodiment of this application, the first device stores the security authentication information of the second access point in advance through the cloud platform corresponding to the unified authentication account, to facilitate establishment of a signal connection with the second access point in a subsequent process.

According to the first aspect or any one implementation of the foregoing first aspect, after the first device cuts off the first signal connection, the method further includes: The first device establishes a fourth signal connection with the second access point when the security authentication information of the second access point is pre-stored, where the first device accesses the Internet through the fourth signal connection.

In this embodiment of this application, since the data connection (the Wi-Fi Direct) established between the first device and the second device operates on the second channel, after cutting off the signal connection with the first access point, the first device may establish the fourth signal connection with the second access point that also operates on the second channel, to access the Internet through the fourth signal connection. In addition, when the first device accesses the Internet through the fourth signal connection, the data connection (the Wi-Fi Direct) and the Internet connection (the fourth signal connection) that are retained simultaneously by the first device both operate on the first channel. Therefore, the first device can be prevented from being in the co-frequency and different-channel operating mode when performing data interaction with the second device.

According to the first aspect or any one implementation of the foregoing first aspect, after the second device cuts off the second signal connection, the method further includes: The first device modifies a locally stored routing table when the security authentication information of the second access point is not pre-stored, to access the Internet through the second device.

In this embodiment of this application, the first device does not store the security authentication information of the second access point, and the first device may be unable to access the second access point. Based on this, the first device may modify the locally stored routing table, to access the Internet through the second device. In this way, the first device can also access the Internet when being unable to connect to the second access point, and the first device may not be in the co-frequency and different-channel operating mode after the subsequent Wi-Fi Direct is established.

According to the first aspect or any one implementation of the foregoing first aspect, that the first device modifies the locally stored routing table when the security authentication information of the second access point is not pre-stored includes: The first device modifies a next-hop address of a default route in the locally stored routing table to an IP address of a network card where the Wi-Fi Direct is located in the second device.

In this embodiment of this application, the first device modifies the next-hop address of the default route in the locally stored routing table to the IP address of the network card where the Wi-Fi Direct is located in the second device, so that the first device may be on the second channel through the Internet connection of the second device, to ensure that the first device is not in the co-frequency and different-channel operating mode when establishing the Wi-Fi Direct with the second device.

According to the first aspect, that the second device establishes the data connection with the first device in response to the data transmission request, and the first device or the second device cuts off the signal connection on a different operating channel from the data connection further includes: The second device selects a target access point from the first access point and the second access point in response to the data transmission request when the first channel and the second channel are both restricted channels and the first access point and the second access point are indicated as different access points. The target access point is indicated as the first access point or the second access point. The second device determines that the data transmission mode is a local area network transmission based on the target access point. The second device sends the third data transmission response to the first device based on the data transmission mode when the target access point is the first access point. The third data transmission response is used to indicate that the data transmission mode is a local area network transmission based on the first access point. The second device cuts off the second signal connection, and the second device establishes a third signal connection with the first access point, where the first signal connection and the third signal connection serve as paths of the data connection.

In this embodiment of this application, the second electronic device first determines an appropriate and efficient data transmission mode based on the first channel and the second channel. When the first channel and the second channel are both restricted channels, a Wi-Fi Direct transmission operating on the unrestricted channel cannot be established between the first device and the second device, and data transmission can only be performed through a local area network. Therefore, the data transmission mode determined by the second device is a local area network transmission based on the target access point. When the target access point is the first access point, the second device sends the data transmission response to the first device, to indicate that the data transmission mode is the local area network transmission based on the first access point. The second device cuts off the second signal connection, and establishes the third signal connection with the first access point, so that the first device and the second device can perform the local area network transmission based on the first access point, thereby ensuring stability of data transmission.

According to the first aspect or any one implementation of the foregoing first aspect, that the second device establishes a data connection with the first device in response to the data transmission request, and the first device or the second device cuts off a signal connection on a different operating channel from the data connection further includes: When the target access point is the second access point, the second device sends a fourth data transmission response to the first device based on the data transmission mode. The fourth data transmission response is used to indicate that the data transmission mode is a local area network transmission based on the second access point. The first device cuts off the first signal connection in response to the fourth data transmission response, and establishes a fourth signal connection with the second access point, where the second signal connection and the fourth signal connection serve as paths of the data connection.

In this embodiment of this application, when the target access point is the second access point, the second device sends the data transmission response to the first device, to indicate that the data transmission mode is the local area network transmission based on the second access point. The first device cuts off the first signal connection, and establishes the fourth signal connection with the second access point, so that the first device and the second device can perform the local area network transmission based on the second access point, thereby ensuring stability of data transmission.

According to the first aspect or any one implementation of the foregoing first aspect, that the data transmission request is further used to indicate a bandwidth, a transmission rate, and a signal-to-noise ratio of the first access point, and the second device selects a target access point from the first access point and the second access point includes: comparing the bandwidth of the first access point with a bandwidth of the second access point, and using an access point with a larger bandwidth as the target access point; comparing the transmission rate of the first access point with a transmission rate of the second access point when the bandwidths are the same, and using an access point with a larger transmission rate as the target access point; and comparing the signal-to-noise ratio of the first access point with a signal-to-noise ratio of the second access point when the transmission rates are the same, and using an access point with a larger signal-to-noise ratio as the target access point.

In this embodiment of this application, through a multi-level comparison of a plurality of parameters such as the bandwidths, the transmission rates, and the signal-to-noise ratios of the first access point and the second access point, the second device can quickly and accurately determine an access point with better network quality from the first access point and the second access point, and select the access point as the target access point, to further improve data transmission efficiency and data transmission stability.

According to the first aspect or any one implementation of the foregoing first aspect, after the second device establishes the data connection with the first device in response to the data transmission request, and the first device or the second device cuts off the signal connection on a different operating channel from the data connection, the method further includes: The first device and the second device perform data interaction through the data connection.

In this embodiment of this application, the first device and the second device perform data interaction through the determined data connection, so as to ensure that neither the first device nor the second device is in the co-frequency and different-channel operating mode during the data interaction, thereby implementing efficient data transmission, and enhancing terminal usage experience of the user.

According to a second aspect, an embodiment of this application provides an electronic device. The electronic device includes: one or more processors, a memory, and a computer program, where the computer program is stored in the memory, and when the computer program is executed by one or more processors, the electronic device is enabled to perform the first aspect or any one of the implementations of the foregoing first aspect.

The second aspect and any implementation of the second aspect respectively correspond to the first aspect and any implementation of the first aspect. For technical effects of the second aspect and any implementation of the second aspect, reference may be made to the technical effects corresponding to the first aspect and any implementation of the first aspect. Details are not described herein again.

According to a third aspect, an embodiment of this application provides a computer storage medium, including a computer instruction. When the computer instruction is run on an electronic device, the electronic device is enabled to perform the first aspect or any one of the implementations of the foregoing first aspect.

The third aspect and any implementation of the third aspect respectively correspond to the first aspect and any implementation of the first aspect. For technical effects of the third aspect and any implementation of the third aspect, reference may be made to the technical effects corresponding to the first aspect and any implementation of the first aspect. Details are not described herein again.

### BRIEF DESCRIPTION OF DRAWINGS

FIG. 1 is a schematic diagram I of a scenario according to an embodiment of this application;
FIG. 2 is a schematic structural diagram of an electronic device according to an embodiment of this application;
FIG. 3 is a block diagram of a software structure of an electronic device according to an embodiment of this application;
FIG. 4 is a block diagram of a software structure of another electronic device according to an embodiment of this application;
FIG. 5 is a flowchart of a data transmission method between electronic devices according to an embodiment of this application;
FIG. 6 is a schematic diagram II of a scenario according to an embodiment of this application;
FIG. 7 is a schematic diagram III of a scenario according to an embodiment of this application;
FIG. 8 is a schematic diagram IV of a scenario according to an embodiment of this application;
FIG. 9 is a schematic diagram V of a scenario according to an embodiment of this application;
FIG. 10 is a schematic diagram VI of a scenario according to an embodiment of this application; and
FIG. 11 is a schematic diagram VII of a scenario according to an embodiment of this application.

### DESCRIPTION OF EMBODIMENTS

The technical solutions in embodiments of this application are clearly and completely described below with reference to the accompanying drawings in embodiments of this application. Apparently, the described embodiments are some rather than all of embodiments of this application. All other embodiments obtained by a person of ordinary skill in the art based on embodiments of this application without making creative efforts shall fall within the protection scope of this application.

The term "and/or" herein is merely an association relationship describing associated objects, which means that three relationships may exist, for example, A and/or B may indicate three cases: A exists alone, A and B exist simultaneously, and B exists alone.

The terms "first", "second", and the like in the specification of embodiments of this application and the claims are used to distinguish between different objects, but are not used to describe a specific order of objects. For example, a first target object, a second target object, and the like are used to distinguish between different target objects, but are not used to describe a specific order of the target objects.

In embodiments of this application, a phrase such as "in an example" or "for example" is used to represent giving an example, an illustration, or a description. Any embodiment or design solution described as "in an example" or "for example" in embodiments of this application should not be explained as being more preferred or advantageous than another embodiment or design scheme. Exactly, use of the phrase such as "in an example" or "for example" is intended to present a related concept in a specific manner.

In the descriptions of embodiments of this application, unless otherwise stated, "a plurality of" means two or more. For example, a plurality of processing units means two or more processing units, and a plurality of systems mean two or more systems.

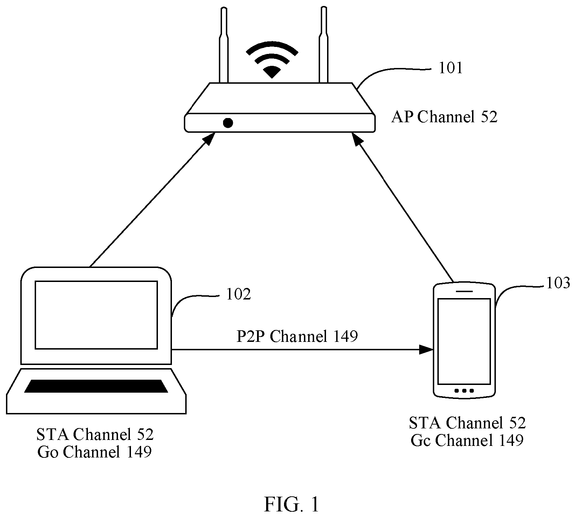

FIG. 1 is a schematic diagram I of a scenario according to an embodiment of this application. Before this embodiment of this application is described, an application scenario of this embodiment of this application is first described based on FIG. 1. As shown in FIG. 1, the application scenario includes a wireless access point 101, an electronic device 102, and an electronic device 103.

The wireless access point 101 is a central node of a network. A wireless router generally used in a family or an office is only one AP. In the scenario, the wireless access point 101 operates on a channel 52. Each electronic device connected to a wireless access point may be referred to as a station (Station, STA). A WiFi STA mode of the station refers to a mode in which the electronic device connects to the wireless access point to access the Internet. The electronic device 102 that has established a wireless connection with the wireless access point 101 may be a personal computer (Personal computer, PC), and an operating channel (referred to as an STA channel for short) of the electronic device 102 in the WiFi STA mode is a channel 52. The electronic device 103 that has established a wireless connection with the wireless access point 101 may be a mobile terminal such as a mobile phone, and the STA channel of the electronic device 103 is the channel 52.

A WiFi P2P mode refers to a mode in which a direct channel is established between electronic devices through a WiFi P2P connection. As shown in FIG. 1, Wi-Fi Direct is established between the electronic device 102 and the electronic device 103. The Wi-Fi Direct can take the advantage of a transmission speed of Wi-Fi, which is widely applied in scenarios such as web browsing, file transmission, and simultaneous communication with a plurality of devices, for example, scenarios such as wireless screen projection, multi-screen collaboration, keyboard and mouse sharing, and call sharing in a smart interconnection scenario.

During establishment of the Wi-Fi Direct, according to relevant regulations, an electronic device that does not have an indoor detection function (which is used to detect whether the electronic device is indoors) and a radar channel detection function (which is used to detect whether a connected channel operates on a radar channel) cannot use indoor channels (such as channels 36-48) and radar channels (such as channels 52-64) as operating channels for the Wi-Fi Direct. In this embodiment of this application, the indoor channel and the radar channel may be collectively referred to as restricted channels, and the remaining channels are referred to as unrestricted channels.

Currently, most electronic devices (for example, the electronic device 102 and the electronic device 103) do not have the indoor detection function and the radar channel detection function. Therefore, when such electronic devices are connected to an AP operating on a restricted channel, and establish Wi-Fi Direct with an additional electronic device, a channel corresponding to the Wi-Fi Direct is inevitably an unrestricted channel. In this case, such electronic devices are in a co-frequency and different-channel operating mode. As shown in FIG. 1, the electronic device 102 is connected to an AP operating on a restricted channel 52, and establishes Wi-Fi Direct with the electronic device 103. The electronic device 102 and the electronic device 103 form a P2P Group. The electronic device 102 serves as a group owner (Group Owner, Go), the electronic device 103 serves as a group client (Group Client, Gc), and an operating channel (referred to as a P2P channel) of the electronic device 102 and the electronic device 103 in the WiFi P2P mode is an unrestricted channel 149. In this case, the electronic device 102 and the electronic device 103 are both in the co-frequency and different-channel operating mode, and the electronic device 102 and the electronic device 103 need to switch between the STA channel (the channel 52) and the P2P channel (the channel 149) during operation. This may result in degraded Internet access fluency of the electronic devices and reduced data transmission efficiency between the electronic devices, and then lead to poor terminal usage experience of a user.

Therefore, an embodiment of this application provides a data transmission method. An appropriate data connection is established through an operating channel (a first channel) of a first access point connected to a first device and an operating channel (a second channel) of a second access point connected to a second device, and the first device or the second device cuts off a signal connection on a different operating channel from the data connection, to prevent the first device and the second device from being in the co-frequency and different-channel operating mode when performing data interaction through the data connection, thereby improving data transmission efficiency between electronic devices, and further enhancing terminal usage experience of the user.

The data transmission method provided in this embodiment of this application may be applied to an electronic device. The electronic device may be a device such as a wearable electronic device (such as a watch), a portable computer (such as a mobile phone), a tablet computer, a notebook computer, a personal computer (personal computer, PC), an augmented reality (augment reality, AR)/virtual reality (virtual reality, VR) device, or a television. No special restriction is imposed on a specific form of the electronic device in the following embodiments.

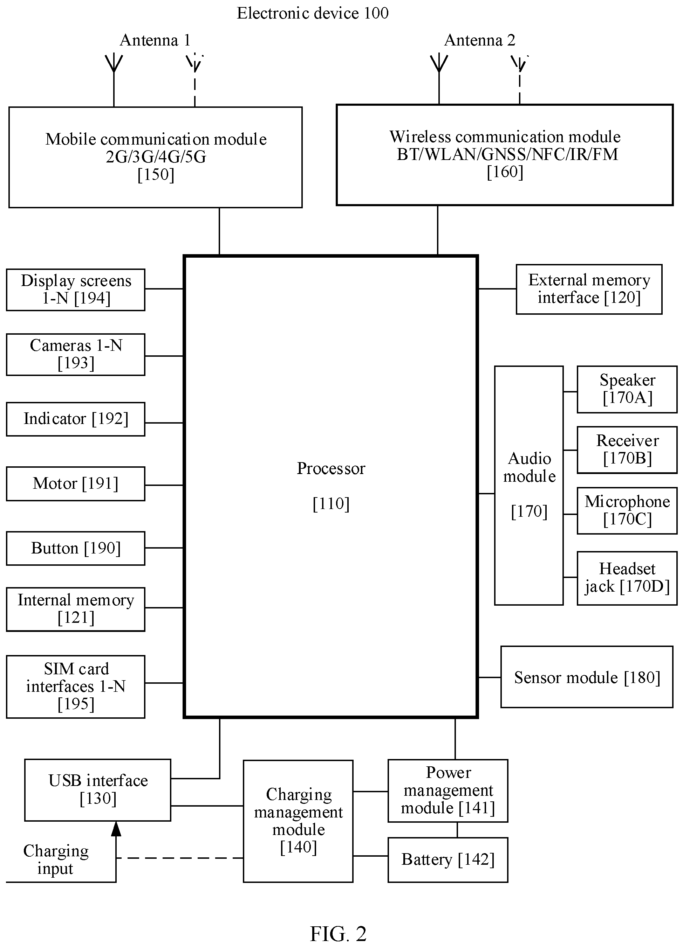

Before the technical solutions in embodiments of this application are described, an electronic device of embodiments of this application is first described with reference to the accompanying drawings. FIG. 2 is a schematic structural diagram of an electronic device 100 according to an embodiment of this application. It should be understood that the electronic device 100 shown in FIG. 2 is merely an example of the electronic device, and the electronic device 100 may have more or fewer components than those shown in the figure, or may have a combination of two or more components, or may have different component configurations. Various components shown in FIG. 2 may be implemented by hardware that includes one or more signal processors and/or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on an instruction operation code and a timing signal, and control obtaining and execution of an instruction.

A memory may be further arranged in the processor 110, which is configured to store an instruction and data. In some embodiments, the memory in the processor 110 is a cache memory. The USB interface 130 is an interface that complies with the USB standard specification, and may be specifically a Mini USB interface, a Micro USB interface, a USB Type C interface, or the like. The USB interface 130 may be configured to connect to a charger to charge the electronic device 100, or may be configured to perform data transmission between the electronic device 100 and the peripheral device. The interface may alternatively be configured to connect to a headset to play audio through the headset. The interface may further be configured to connect to another electronic device such as an AR device.

In some embodiments, the processor may further send a data transmission request to a peer device, for example, a device such as a mobile phone, a tablet computer, or a television, in response to an interaction instruction triggered by a user. The interaction instruction is, for example, a wireless screen projection instruction or a multi-screen collaboration instruction. The processor may further control a network connection relationship thereof for adjustment based on a data transmission mode indicated by the data transmission response returned by the peer electronic device. In addition, the processor may further control, based on the data transmission mode indicated by the data transmission response after the signal connection is adjusted, the electronic device to perform data interaction with the peer device.

The processor may further determine, in response to a data transmission request sent by the peer device, for example, a device such as a mobile phone or a tablet computer, a data transmission mode between the processor and the peer device based on network information of a wireless network connected to which the peer device and network information of a wireless network connected to the processor. After the data transmission mode is determined, the wireless communication module is controlled to send the data transmission response to the peer device. This allows the peer device to adjust a signal connection based on the data transmission mode indicated by the data transmission response, so that the peer device maintains a constant channel during subsequent data interaction.

The charging management module 140 is configured to receive a charging input from a charger. The charger may be a wireless charger, or may be a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. The charging management module 140 may further supply power to the electronic device through the power management module 141 while charging the battery 142.

The power management module 141 is configured to connect to the battery 142, the charging management module 140, and the processor 110. The power management module 141 receives input from the battery 142 and/or the charging management module 140, and supplies power to the processor 110, the internal memory 121, the external memory, the display screen 194, the camera 193, the wireless communication module 160, and the like. A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication bands. Different antennas may further be multiplexed to increase a utilization rate of the antennas. For example, the antenna 1 may be multiplexed into a diversity antenna of a wireless local area network. In some other embodiments, the antennas may be used in combination with a tuning switch.

The mobile communication module 150 may provide a solution to wireless communication including 2G/3G/4G/5G and the like applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the processed electromagnetic wave to the modem processor for demodulation. The mobile communication module 150 may further amplify a signal modulated by the modem processor, and convert the signal into an electromagnetic wave through the antenna 1 for radiation. In some embodiments, at least some of the functional modules of the mobile communication module 150 may be arranged in the processor 110. In some embodiments, at least some of the functional modules of the mobile communication module 150 may be arranged in a same device as at least some of the modules of the processor 110.

The modem processor may include a modulator and a demodulator. The modulator is configured to modulate a to-be-sent low-frequency baseband signal into a medium or high-frequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor and then transmitted to an application processor. The application processor outputs a sound signal through an audio device (which is not limited to the speaker 170A, the receiver 170B, and the like), or displays an image or a video through the display screen 194. In some embodiments, the modem processor may be an independent device. In some other embodiments, the modem processor may be independent of the processor 110, and is arranged in a same device as the mobile communication module 150 or another functional module.

The wireless communication module 160 may provide a solution to wireless communication including a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared (infrared, IR) technology, and the like applied to the electronic device 100. The wireless communication module 160 may be one or more devices into which at least one communication processing module is integrated. The wireless communication module 160 receives an electromagnetic wave through the antenna 2, performs frequency modulation and filtering on the electromagnetic wave signal, and sends the processed signal to the processor 110. The wireless communication module 160 may further receive a to-be-sent signal from the processor 110, perform frequency modulation and amplification on the to-be-sent signal, and convert the to-be-sent signal into an electromagnetic wave through the antenna 2 for radiation.

In some embodiments, the electronic device 100 may communicate, through the wireless communication module, with another electronic device through a wireless local area network, or may establish Wi-Fi Direct with another electronic device through the wireless communication module.

In some embodiments, in the electronic device 100, the antenna 1 is coupled to the mobile communication module 150, and the antenna 2 is coupled to the wireless communication module 160, so that the electronic device 100 may communicate with a network and another device through a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite-based augmentation system (satellite based augmentation systems, SBAS).

The electronic device 100 implements a display function through the GPU, the display screen 194, the application processor, or the like. The GPU is a microprocessor for image processing and is connected to the display screen 194 and the application processor. The GPU is configured to perform mathematical and geometric calculation, and is configured to perform graphics rendering. The processor 110 may include one or more GPUs, and is configured to execute a program instruction to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED) display, or the like. In some embodiments, the electronic device 100 may include 1 or N display screens 194, where N is a positive integer greater than 1.

The electronic device 100 may implement a photographing function through the ISP, the camera 193, the video codec, the GPU, the display screen 194, the application processor, and the like.

The camera 193 is configured to capture a static image or a video. An optical image is generated for an object through the lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include 1 or N cameras 193, where N is a positive integer greater than 1.

The digital signal processor is configured to process a digital signal. In addition to a digital image signal, the digital signal processor may further process another digital signal. For example, when the electronic device 100 performs frequency selection, the digital signal processor is configured to perform Fourier transform, and the like on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG) 1, MPEG2, MPEG3, and MPEG4.

The external memory interface 120 may be configured to connect to an external storage card such as a Micro SD card, to expand a storage capacity of the electronic device 100. The external storage card communicates with the processor 110 through the external memory interface 120, to implement a data storage function. For example, files such as a music file and a video file are stored into the external storage card.

The internal memory 121 may be configured to store computer-executable program code. The executable program code includes an instruction. The processor 110 runs the instruction stored in the internal memory 121, to perform various functional applications and data processing of the electronic device 100. The internal memory 121 may include a program storage area and a data storage area. The program storage area may store an operating system, an application program required by at least one function (such as a sound playback function or an image playback function), and the like. The data storage area may store data (such as audio data and an address book) and the like created during use of the electronic device 100. In addition, the internal memory 121 may include a high-speed random access memory, and may further include a nonvolatile memory, for example, at least one disk storage device, a flash memory device, and a universal flash storage (universal flash storage, UFS).

The electronic device 100 may implement an audio function such as music playback or recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may further be configured to encode and decode an audio signal. In some embodiments, the audio module 170 may be arranged in the processor 110, or some functional modules in the audio module 170 are arranged in the processor 110.

The speaker 170A, also referred to as a "horn", is configured to convert an electrical audio signal into a sound signal. The electronic device 100 may be used to listen to music or listen to a hands-free call through the speaker 170A.

The receiver 170B, also referred to as a "handset", is configured to convert an electrical audio signal into a sound signal. When the electronic device 100 answers a call or receives voice information, the receiver 170B may be put close to a human ear to receive a voice.

The microphone 170C, also referred to as a "voice tube" or "mike", is configured to convert a sound signal into an electrical signal. When making a call or sending voice information, a user may make a sound approaching the microphone 170C through a mouth of the user, to input a sound signal into the microphone 170C. At least one microphone 170C may be arranged in the electronic device 100. In some other embodiments, two microphones 170C may be arranged in the electronic device 100, to collect a sound signal and implement a noise reduction function. In some other embodiments, three, four, or more microphones 170C may be alternatively arranged in the electronic device 100, to collect a sound signal, implement noise reduction, recognize a sound source, implement a directional recording function, and the like.

The headset jack 170D is configured to connect to a wired headset. The headset jack 170D may be a USB interface 130, or may be a 3.5 mm open mobile electronic device platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be arranged in the display screen 194. Many types of pressure sensors 180A are arranged, such as a resistive pressure sensor, an inductance pressure sensor, and a capacitive pressure sensor. The capacitive pressure sensor may include at least two parallel plates including conductive materials. When a force is applied to the pressure sensor 180A, a capacitance between electrodes changes. The electronic device 100 determines intensity of a pressure based on the change in the capacitance. When a touch operation is performed on the display screen 194, the electronic device 100 detects a touch operation intensity through the pressure sensor 180A. The electronic device 100 may also calculate a touch position based on a detection signal of the pressure sensor 180A. In some embodiments, touch operations that are performed on a same touch position but have different touch operation intensities may correspond to different operation instructions. For example, when a touch operation whose touch operation intensity is less than a first pressure threshold is performed on a short message application icon, an instruction of checking a short message is executed. When a touch operation having a touch operation strength greater than or equal to the first pressure threshold is applied to the short message application icon, an instruction of creating a new short message is executed.

The gyroscope sensor 180B may be configured to determine a movement posture of the electronic device 100. In some embodiments, an angular velocity of the electronic device 100 around three axes (that is, x, y, and z axes) may be determined through the gyroscope sensor 180B. The gyroscope sensor 180B may be used for image stabilization during photographing. For example, when the shutter is pressed, the gyroscope sensor 180B detects an angle at which the electronic device 100 jitters, and calculates, based on the angle, a distance for which a lens module needs to compensate, to allow the lens to cancel the jitter of the electronic device 100 through reverse motion, thereby implementing image stabilization. The gyroscope sensor 180B may further be configured in navigation and a motion sensing game scenario.

The barometric pressure sensor 180C is configured to measure an air pressure. In some embodiments, the electronic device 100 calculates an altitude through the air pressure value measured by the barometric pressure sensor 180C, and assists positioning and navigation.

A magnetic sensor 180D includes a Hall sensor. The electronic device 100 may detect opening and closing of a flip leather cover by using the magnetic sensor 180D. In some embodiments, when the electronic device 100 is a clamshell phone, the electronic device 100 may detect opening and closing of a flip through the magnetic sensor 180D. Further, characteristics such as automatic unlocking of the flip are set based on the detected opening and closing state of the leather cover or the opening and closing state of the flip.

The acceleration sensor 180E may detect a magnitude of acceleration of the electronic device 100 in each direction (generally three axes). When the electronic device 100 is stationary, a magnitude and a direction of a gravity may be detected. The acceleration sensor may further be configured to recognize a posture of the electronic device, and is applied to applications such as switching between a landscape mode and a portrait mode and a pedometer.

The distance sensor 180F is configured to measure a distance. The electronic device 100 may measure a distance through infrared light or laser. In some embodiments, in a shooting scenario, the electronic device 100 may measure a distance by using the distance sensor 180F, to implement quick focusing.

The optical proximity sensor 180G may include, for example, a light-emitting diode (LED) and a light detector, for example, a photodiode. The light-emitting diode may be an infrared light-emitting diode. The electronic device 100 emits infrared light through the light-emitting diode. The electronic device 100 detects infrared reflected light from a nearby object by using the photodiode. When sufficient reflected light is detected, it may be determined that an object exists near the electronic device 100. When insufficient reflected light is detected, the electronic device 100 may determine that no object exists near the electronic device 100. The electronic device 100 may detect, by using the optical proximity sensor 180G, that a user holds the electronic device 100 close to an ear for a call, so as to implement automatic screen-off to save power. The optical proximity sensor 180G may also be configured to automatically unlock and lock the screen in a case mode and a pocket mode.

The ambient light sensor 180L is configured to perceive ambient light brightness. The electronic device 100 may adaptively adjust a brightness of the display screen 194 based on the perceived ambient light brightness. The ambient light sensor 180L may also be configured to automatically adjust white balance during photographing. The ambient light sensor 180L may further cooperate with the optical proximity sensor 180G to detect whether the electronic device 100 is in a pocket to prevent an accidental touch.

The fingerprint sensor 180H is configured to collect a fingerprint. The electronic device 100 may implement fingerprint unlocking, application lock accessing, fingerprint photographing, fingerprint-based call answering, and the like by using a feature of the collected fingerprint.

The temperature sensor 180J is configured to detect a temperature. In some embodiments, the electronic device 100 executes a temperature processing policy by using the temperature detected by the temperature sensor 180J. For example, when a temperature reported by the temperature sensor 180J exceeds a threshold, the electronic device 100 reduces performance of a processor near the temperature sensor 180J, to reduce power consumption and implement heat protection. In some other embodiments, when the temperature is lower than another threshold, the electronic device 100 heats the battery 142, to avoid an abnormal shutdown of the electronic device 100 caused by a low temperature. In some other embodiments, when the temperature is lower than still another threshold, the electronic device 100 boosts an output voltage of the battery 142 to prevent an abnormal shutdown caused by the low temperature.

The touch sensor 180K is also referred to as a "touch panel". The touch sensor 180K may be arranged in the display screen 194. The touch sensor 180K and the display screen 194 form a touchscreen, which is also referred to as a "touch screen". The touch sensor 180K is configured to detect a touch operation performed on or near the touch sensor. The touch sensor may transfer the detected touch operation to the application processor to determine a touch event type. A visual output related to the touch operation may be provided through the display screen 194. In some other embodiments, the touch sensor 180K may also be arranged on a surface of the electronic device 100 at a location different from that of the display screen 194.

The bone conduction sensor 180M may obtain a vibration signal. In some embodiments, the bone conduction sensor 180M may obtain vibration signals of the vibration bone of the vocal-cord part in a human body. The bone conduction sensor 180M may also contact a human pulse to receive a blood pressure beating signal. In some embodiments, the bone conduction sensor 180M may alternatively be arranged in the headset, combined to form a bone conduction headset. The audio module 170 may obtain a speech signal through parsing based on the vibration signal of the vibration bone of the vocal-cord part that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power-on button, a volume button, and the like. The button 190 may be a mechanical button, or may be a touch button. The electronic device 100 may receive a button input, and generate a button signal input related to user setting and function control of the electronic device 100.

The motor 191 may generate a vibration prompt. The motor 191 may be configured to provide a vibration prompt for an incoming call, or may be configured to provide vibration feedback for touch. For example, touch operations performed on different applications (for example, photographing and audio playback) may correspond to different vibration feedback effects. The indicator 192 may be an indicator light, and may be configured to indicate a charging state or a battery change, or may be configured to indicate a message, a missed call, a notification, and the like.

A software system of the electronic device 100 may use a layered architecture, an event-driven architecture, a microkernel architecture, a microservice architecture, or a cloud architecture. In this embodiment of this application, the software structure of the electronic device 100 is described through examples by using an Android system with a layered architecture as an example.

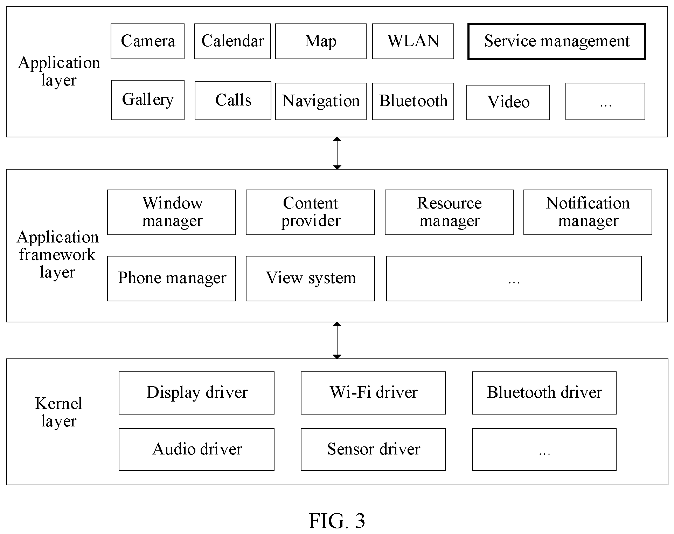

FIG. 3 is a block diagram of a software structure of an electronic device 100 according to an embodiment of this application. The electronic device 100 shown in FIG. 3 may be a computer, for example, a notebook computer or a personal computer (personal computer, PC).

In a layered architecture of the electronic device 100, software is divided into several layers, and each of the layers has a clear role and task. The layers communicate with each other through a software interface. In some embodiments, the Android system is divided into four layers, that is, an application layer, an application framework layer, an Android runtime (Android runtime), a system library, and a kernel layer from top to bottom.

The application layer may include a series of application packages.

As shown in FIG. 3, the application packages may include applications such as Camera, Gallery, Calendar, Phone, Maps, Navigation, WLAN, Bluetooth, Videos, and Service Management.

In some embodiments, the Service Management application may provide at least one service of wireless screen projection, multi-screen collaboration, keyboard and mouse sharing, or call sharing. The Service Management application is, for example, an application such as Computer Manager.

The Service Management application may send a data transmission request to a peer device, for example, a device such as a mobile phone, a tablet computer, or a television, in response to an interaction instruction triggered by a user. The interaction instruction is, for example, a wireless screen projection instruction or a multi-screen collaboration instruction. The Service Management application may further receive a data transmission response returned by the peer electronic device, and control, based on a data transmission mode indicated by the data transmission response, a network connection relationship thereof for adjustment. In addition, the Service Management application may further perform data interaction with the peer device based on the data transmission mode indicated by the data transmission response after the signal connection is adjusted.

The Service Management application may further determine, in response to a data transmission request sent by the peer device, for example, a device such as a mobile phone or a tablet computer, a data transmission mode between the processor and the peer device based on network information of a wireless network connected to which the peer device and network information of a wireless network connected to the processor. After the data transmission mode is determined, the data transmission response may further be sent to the peer device. This allows the peer device to adjust a signal connection based on the data transmission mode indicated by the data transmission response, so that the peer device maintains a constant channel during subsequent data interaction.

The application framework layer provides an application programming interface (application programming interface, API) and a programming framework for the application at the application layer. The application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may obtain a size of a display screen, determine whether a status bar exists, perform screen locking, take a screenshot of the screen, and the like.

The content provider is configured to store and obtain data and enable the data to be accessible to an application. The data may include a video, an image, an audio, calls that are made and answered, a browse history and a bookmark, a phonebook, and the like.

The view system includes visual controls such as a control for displaying a text and a control for display a picture. The view system may be configured to construct an application program. A display interface may include one or more views. For example, a display interface including a short message notification icon may include a view for displaying a text and a view for displaying a picture.

The phone manager is configured to provide a communication function for the electronic device 100, for example, management of a call state (including answering, hanging up, and the like).

The resource manager provides various resources for an application program, such as a localized character string, an icon, a picture, a layout file, and a video file.

The notification manager enables an application to display notification information in the status bar that may be used to convey a message of a notification type, which may disappear automatically after a short stay without user interaction. For example, the notification manager is configured to provide a notification of download completion, a message notification, and the like. The notification manager may further be a notification that appears on a top status bar of a system in a form of a graph or a scroll bar text, for example, a notification of an application that runs on a background, or may be a notification that appears on a screen in a form of a dialog window. For example, text information is prompted on a status bar, a prompt tone is made, the electronic device vibrates, or an indicator light flashes.

The kernel layer is a layer between hardware and software. The kernel layer includes at least a display driver, a camera driver, an audio driver, and a sensor driver.

It may be understood that the layers in the software structure shown in FIG. 3 and the components included in each of the layers do not constitute a specific limitation on the electronic device 100. In some other embodiments of this application, the electronic device 100 may include more or fewer layers than those shown in the figure, and each layer may include more or fewer components. This is not limited in this application.

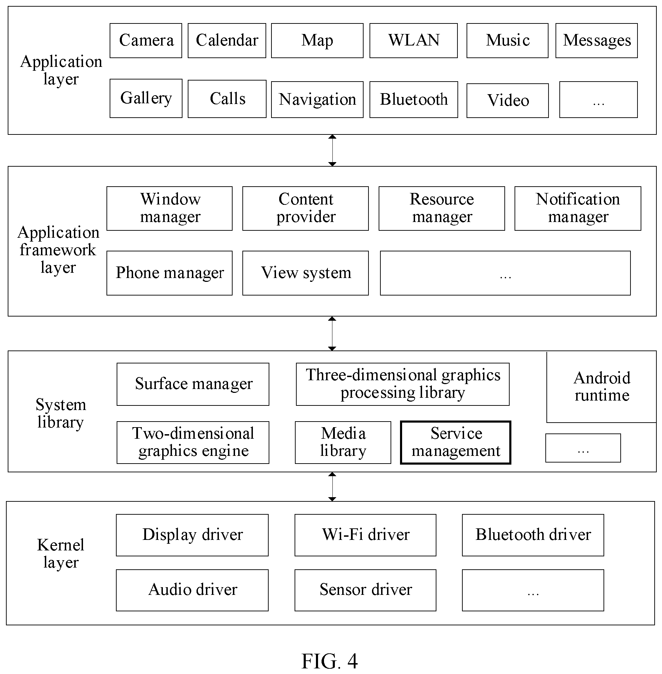

FIG. 4 is a block diagram of a software structure of another electronic device 100 according to an embodiment of this application. The electronic device 100 shown in FIG. 4 may be a terminal device such as a mobile phone, a tablet computer, or a television.

In a layered architecture of the electronic device 100, software is divided into several layers, and each of the layers has a clear role and task. The layers communicate with each other through a software interface. In some embodiments, the Android system is divided into four layers, that is, an application layer, an application framework layer, an Android runtime (Android runtime), a system library, and a kernel layer from top to bottom.

The application layer may include a series of application packages.

As shown in FIG. 4, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for the application at the application layer. The application framework layer includes some predefined functions.

As shown in FIG. 4, the application framework layer may include a window manager, a content provider, a view system, a phone manager, a resource manager, a notification manager, and the like.

A structure of the application framework layer in FIG. 4 is similar to that of the application framework layer in FIG. 3. For descriptions of parts included in the application framework layer in FIG. 4, reference may be made to detailed descriptions of the application framework layer corresponding to foregoing FIG. 3, and details are not described herein again.

The Android Runtime includes a core library and a virtual machine. The Android runtime is responsible for scheduling and managing the Android system.

The core library includes two parts: one part is a performance function that the Java language needs to call, and the other part is a core library of Android.

The application layer and the application framework layer are run in the virtual machine. The virtual machine executes Java files of the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), media libraries (Media Libraries), a three-dimensional graphics processing library (for example, OpenGL ES), and a 2D graphics engine (for example, an SGL).

The surface manager is configured to manage a display subsystem, and provide fusion of 2D layers and 3D layers for a plurality of applications.

The media libraries support playback and recording in a plurality of common audio and video formats, static image files, and the like. The media libraries may support a plurality of audio/video encoding formats, such as MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

In some embodiments, the system library further includes a service management module, where the service management module is configured to provide at least one of services such as wireless screen projection, multi-screen collaboration, keyboard and mouse sharing, and call sharing.

The service management module may send a data transmission request to a peer device, for example, a device such as a mobile phone, a tablet computer, or a television, in response to an interaction instruction triggered by a user. The interaction instruction is, for example, a wireless screen projection instruction or a multi-screen collaboration instruction. The service management module may further receive a data transmission response returned by the peer electronic device, and control, based on a data transmission mode indicated by the data transmission response, a network connection relationship thereof for adjustment. In addition, the service management module may further perform data interaction with the peer device based on the data transmission mode indicated by the data transmission response after the signal connection is adjusted.

The service management module may further determine, in response to a data transmission request sent by the peer device, for example, a device such as a mobile phone or a tablet computer, a data transmission mode between the processor and the peer device based on network information of a wireless network connected to which the peer device and network information of a wireless network connected to the processor. After the data transmission mode is determined, the data transmission response may further be sent to the peer device. This allows the peer device to adjust a signal connection based on the data transmission mode indicated by the data transmission response, so that the peer device maintains a constant channel during subsequent data interaction.

The kernel layer is a layer between hardware and software. The kernel layer includes at least a display driver, a Wi-Fi driver, a Bluetooth driver, an audio driver, and a sensor driver.

It may be understood that the layers in the software structure shown in FIG. 4 and the components included in each of the layers do not constitute a specific limitation on the electronic device 100. In some other embodiments of this application, the electronic device 100 may include more or fewer layers than those shown in the figure, and each layer may include more or fewer components. This is not limited in this application.

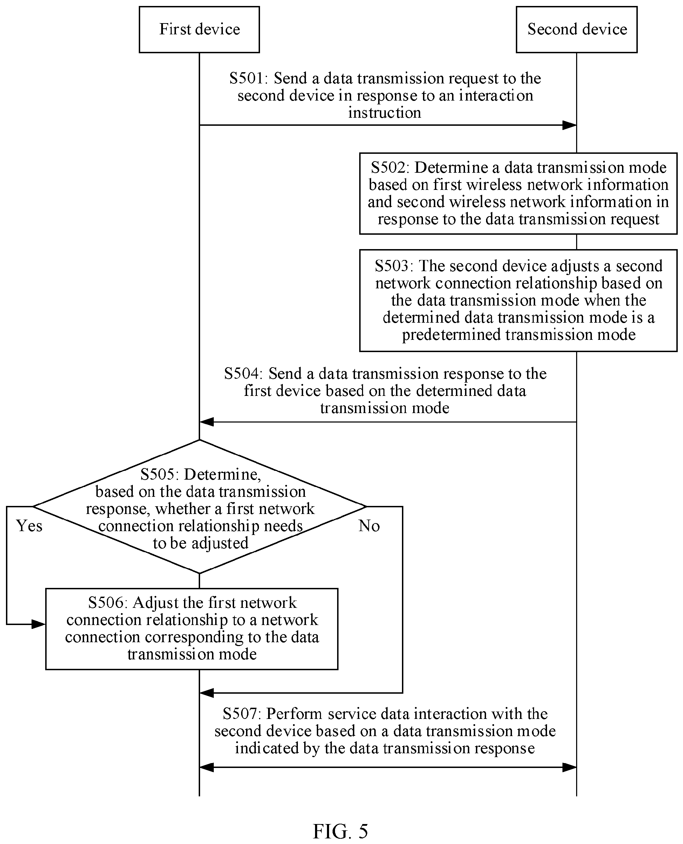

FIG. 5 is a flowchart of a data transmission method between electronic devices according to an embodiment of this application. The electronic device includes a first device and a second device. The first device accesses a first access point through a first signal connection. The second device is connected to a second access point through a second signal connection. The first access point operates on a first channel. The second access point operates on a second channel. At least one of the first channel and the second channel is a restricted channel (for example, the foregoing radar channel or indoor channel).

It should be noted that in this embodiment of this application, the first access point is configured to describe a wireless access point to which the first device is initially connected, and the second access point is configured to describe a wireless access point to which the second device is initially connected. Since the first device and the second device may be connected to a same wireless access point, or may be connected to different wireless access points, when the first device and the second device are initially connected to the same wireless access point, the first access point and the second access point are indicated as the same wireless access point. When the first device and the second device are initially connected to different wireless access points, the first access point and the second access point are indicated as different wireless access points.

As shown in FIG. 5, the data transmission method includes the following step S501 to step S507.

Step S501: A first device sends a data transmission request to a second device in response to an interaction instruction.

The interaction instruction is, for example, a wireless screen projection instruction or a multi-screen interaction instruction.

In an application scenario, for example, an application scenario of wireless screen projection, a user triggers a wireless screen projection instruction on the first device, and the first device sends a screen projection data transmission request to the second device in response to the wireless screen projection instruction.

The data transmission request is used to request to establish a data connection with the second device. The data transmission request includes first wireless network information. The first wireless network information is network information of a first access point currently connected to the first device. The first wireless network information includes, but is not limited to, information such as an access point identifier of the first access point, an operating channel (a first channel), a bandwidth, a transmission rate, and a signal-to-noise ratio. The access point identifier is, for example, a name (Service Set Identifier, SSID) of a wireless network.

In an implementation, the first device sends a data transmission request to the second device, and the second device receives the data transmission request, and then extracts the first wireless network information from the data transmission request.

Step S502: The second device determines a data transmission mode based on the first wireless network information and second wireless network information in response to the data transmission request.

The second wireless network information is network information of the second access point, and the second access point is a wireless access point to which the second device is currently connected.

In an implementation, the second device accesses the second access point, and obtains the second wireless network information from the second access point. The second wireless network information includes, but is not limited to, information such as an access point identifier of the second access point, an operating channel (a second channel), a bandwidth, a transmission rate, and a signal-to-noise ratio.

The data transmission mode includes local area network transmission or Wi-Fi Direct transmission. The local area network transmission refers to a transmission mode in which the first device and the second device forward data through a wireless access point. The Wi-Fi Direct transmission refers to a mode in which the first device and the second device transmit data through an established Wi-Fi Direct channel. It should be noted that currently, in a scenario of a smart interconnection service, during data transmission between electronic devices, the data transmission is often performed through Wi-Fi Direct, to improve data transmission efficiency. However, since signal connection scenarios of the electronic devices are different, in many scenarios (for example, the scenario shown in FIG. 1), after establishing the Wi-Fi Direct, the electronic device is in the co-frequency and different-channel operating mode, which results in reduced data transmission efficiency instead. Therefore, in this embodiment of this application, after receiving the data transmission request of the first device, the second device needs to determine whether it is suitable to establish the Wi-Fi Direct between the second device and the first device, and then select an appropriate data transmission mode.

In an implementation, the step in which the second device determines the data transmission mode based on the first wireless network information and the second wireless network information in response to the data transmission request includes the following step 5021 to step 5023.

Step 5021: The second device determines, based on an operating channel of the first access point and an operating channel of the second access point, whether one of the first access point and the second access point operates on an unrestricted channel.

The unrestricted channel refers to a channel other than the restricted channels (the forgoing radar channel and indoor channel), and the unrestricted channel is, for example, a channel 149.

In some embodiments, the second device may extract the operating channel of the first access point from the first wireless network information, and extract the operating channel of the second access point from the second wireless network information, and then determine whether one of the first access point and the second access point operates on the unrestricted channel.

Step 5022: When one of the first access point and the second access point operates on the unrestricted channel, it is determined that the data transmission mode is a Wi-Fi Direct transmission.

It should be noted that when one of the first access point and the second access point operates on the unrestricted channel, both the first device and the second device may access the Internet through the access point operating on the unrestricted channel. Wi-Fi Direct on a same channel as the unrestricted channel may also be established between the first device and the second device, so that after the Wi-Fi Direct is established, operating modes of the first device and the second device may be maintained in a same frequency and channel. Therefore, when one of the first access point and the second access point operates on the unrestricted channel, data transmission may be performed between the first device and the second device through the Wi-Fi Direct, and the second device determines that the data transmission mode is the Wi-Fi Direct transmission.

In an example, when the first access point operates on an unrestricted channel (the first channel is an unrestricted channel) and the second access point operates on a restricted channel (the second channel is a restricted channel), the second device determines that the data transmission mode is a first Wi-Fi Direct transmission.

In another example, when the first access point operates on a restricted channel (the first channel is a restricted channel) and the second access point operates on an unrestricted channel (the second channel is an unrestricted channel), the second device determines that the data transmission mode is a second Wi-Fi Direct transmission.

Step 5023: When both the first access point and the second access point operate on a restricted channel, it is determined that the data transmission mode is a local area network transmission.

It should be noted that both the first access point and the second access point operate on the restricted channel. Therefore, as long as the Wi-Fi Direct is established between the first device and the second device (a channel corresponding to the Wi-Fi Direct is usually an unrestricted channel), the first device and the second device are in the co-frequency and different-channel operating mode. To prevent the data transmission from being performed between the first device and the second device in the co-frequency and different-channel operating mode, the first device and the second device cannot perform data transmission through the Wi-Fi Direct, but perform data transmission through a local area network. Therefore, the second device may determine that the data transmission mode for the current data transmission is the local area network transmission.

In some embodiments, the step (the forgoing step 5023) in which when both the first access point and the second access point operate on the restricted channel, it is determined that the data transmission mode is the local area network transmission includes: When both the first access point and the second access point operate on a restricted channel (the first channel and the second channel are both restricted channels), and the first access point and the second access point are indicated as different access points, the second device selects a target access point from the first access point and the second access point, and determines that the data transmission mode is the local area network transmission based on the target access point.

The second device may determine, based on the access point identifier in the first network information and the access point identifier in the second network information, whether the first access point and the second access point are indicated as different access points. For example, when the access point identifier in the first network information is the same as the access point identifier in the second network information, the first access point and the second access point are indicated the same access point, that is, the first device and the second device are connected to the same access point. When the access point identifier in the first network information is different from the access point identifier in the second network information, the first access point and the second access point are indicated as different access points, that is, the first device and the second device are connected to different access points.

In this embodiment, the first device and the second device are currently connected to different access points. To perform data transmission between the first device and the second device through a local area network, the first device and the second device need to be connected to a same wireless access point. Therefore, the second device selects one of the first access point and the second access point as the target access point, and the first device and the second device may be connected to the target access point to perform data transmission of the local area network, thereby improving data transmission efficiency and data transmission stability of the current data transmission.

In an example, the step of selecting the target access point from the first access point and the second access point by the second device includes the following step I to step VI.

Step I: Compare a bandwidth of the first access point with a bandwidth of the second access point.

Step II: Select an access point with a larger bandwidth from the first access point and the second access point as the target access point.

Step III: Compare a transmission rate of the first access point with a transmission rate of the second access point when the bandwidth of the first access point is the same as the bandwidth of the second access point.

Step IV: Select an access point with a larger transmission rate from the first access point and the second access point as the target access point.

Step V: Compare a signal-to-noise ratio of the first access point with a signal-to-noise ratio of the second access point when the transmission rate of the first access point is the same as the transmission rate of the second access point.

Step VI: Select an access point with a large signal-to-noise ratio from the first access point and the second access point as the target access point.

In the example, through a multi-level comparison of a plurality of parameters such as the bandwidths, the transmission rates, and the signal-to-noise ratios of the first access point and the second access point, the second device can quickly and accurately determine an access point with better network quality from the first access point and the second access point, and select the access point as the target access point, to further improve data transmission efficiency and data transmission stability.

It may be understood that when a plurality of network quality parameters (parameters such as the bandwidth, the transmission rate, and the signal-to-noise ratio) of the first access point and the second access point are the same, the second device may select any one of the first access point or the second access point as the target access point.

In an example, the foregoing step of determining that the data transmission mode is a local area network transmission based on the target access point includes: determining that the data transmission mode is a local area network transmission based on the first access point (referred to as a first local area network transmission below) when the target access point is the first access point.

In another example, the foregoing step of determining that the data transmission mode is a local area network transmission based on the target access point includes: determining that the data transmission mode is a local area network transmission based on the second access point (referred to as a second local area network transmission below) when the target access point is the second access point.

It should be noted that when the first access point and the second access point both operate on a restricted channel, and the first access point and the second access point are indicated as the same access point, the second device does not need to select the target access point, and an access point to which the first device and the second device are jointly connected is the target access point. The first device and the second device may perform the data transmission of the local area network through the jointly connected access point during the data transmission.

In this embodiment of this application, the second device can determine, based on the first wireless network information and the second wireless network information through the foregoing step 5021 to step 5023, whether it is suitable to establish the Wi-Fi Direct between the second device and the first device. When it is suitable to establish the Wi-Fi Direct (that is, when the Wi-Fi Direct is established between the first device and the second device, neither the first device nor the second device can be in the co-frequency and different-channel operating mode), the determined data transmission mode is the Wi-Fi Direct transmission. When it is unsuitable to establish the Wi-Fi Direct, the determined data transmission mode is the local area network transmission. The second device can accurately determine an appropriate data transmission mode, to prevent the first device and the second device from operating in a same frequency and different channels subsequently, thereby improving data transmission efficiency.

Step S503: When the determined data transmission mode is a predetermined transmission mode, the second device adjusts a second network connection relationship based on the data transmission mode.

The predetermined transmission mode includes the first Wi-Fi Direct transmission or the first local area network transmission. The second network connection relationship is used to indicate a signal connection relationship between the second device and a plurality of other devices, for example, a signal connection relationship between the second device and the first access point, a signal connection relationship between the second device and the second access point, and a signal connection relationship between the second device and the first device. Adjustment modes include modes such as releasing a connection and establishing a new connection.

In an implementation, the step of adjusting the second network connection relationship by the second device based on the data transmission mode when the determined data transmission mode is the predetermined transmission mode (the foregoing step S503) includes: cutting off a wireless connection (the second signal connection) with the second access point when the determined data transmission mode is the first Wi-Fi Direct transmission. In addition, when security authentication information of the first access point is pre-stored, a wireless connection (a third signal connection) is established with the first access point, where the second device accesses the Internet through the third signal connection.

In the implementation, when the first access point operates on the unrestricted channel and the second access point operates on the restricted channel, the determined data transmission mode is the first Wi-Fi Direct transmission. The second device currently connected to the second access point needs to establish Wi-Fi Direct with the first device in a subsequent process. Therefore, to prevent the second device from being in the co-frequency and different-channel operating mode after the Wi-Fi Direct is established, the second device needs to adjust a current network connection thereof (the second network connection relationship). In addition, the second device establishes a wireless connection with the first access point when pre-storing the security authentication information of the first access point. In this way, the second device and the first device are connected to the same wireless access point, that is, operate on a same unrestricted channel. After the Wi-Fi Direct is established subsequently, the second device is not in the co-frequency and different-channel operating mode but in a co-frequency and different-channel operating mode while maintaining both the data connection (the Wi-Fi Direct) and the Internet connection (the third signal connection).

In an example, a manner in which the second device pre-stores the security authentication information of the first access point includes: The second device establishes a Bluetooth wireless connection with the first device, and obtains the security authentication information of the first access point from the first device through the Bluetooth wireless connection. The security authentication information is, for example, a password or a personal identification number (Personal Identification Number, PIN) of the first access point.

For example, the second device establishes a Bluetooth wireless connection with the first device, and the second device sends an authentication information request to the first device through the Bluetooth wireless connection. The first device returns an authentication information response to the second device through the Bluetooth wireless connection in response to the authentication information request. The authentication information response includes the security authentication information of the first access point.

In another example, the manner in which the second device pre-stores the security authentication information of the first access point further includes: When the second device and the first device log in to a unified authentication account, the security authentication information of the first access point is synchronized through a cloud platform corresponding to the unified authentication account. For example, when the second device and the first device log in to a same Honor account, and the first device accesses the first access point, the security authentication information of the first access point is uploaded to the cloud space corresponding to the Honor account. In a networking state, the second device may synchronize the security authentication information of the first access point from the cloud space corresponding to the Honor account to local storage.

In this embodiment of this application, when the first device and the second device log in to the unified authentication account, the first device and the second device may share security authentication information of the wireless access point, thereby improving convenience for the first device and the second device to access the wireless access point.

In another implementation, the step of adjusting the second network connection relationship by the second device based on the data transmission mode when the determined data transmission mode is the predetermined transmission mode (the foregoing step S503) further includes: cutting off a wireless connection with the second access point when the determined data transmission mode is the first Wi-Fi Direct transmission; and modifying a locally stored routing table when the security authentication information of the first access point is not stored, to access the Internet through the first device.

It may be learned from the foregoing implementation that the second device may access the Internet by connecting to the first access point, and then may implement a Wi-Fi Direct transmission with the first device in the subsequent process. However, in this implementation, the second device does not store the security authentication information of the first access point, and the second device may be unable to access the first access point. Based on this, the second device may modify the locally stored routing table, to access the Internet through the first device. In this way, the second device can also access the Internet when being unable to connect to the first access point, and the second device may not be in the co-frequency and different-channel operating mode after the subsequent Wi-Fi Direct is established.

In an example, the step in which the second device modifies the locally stored routing table to implement network access through the first device includes: The second device modifies a next-hop address of a default route in the routing table to an IP address of a network card where Wi-Fi Direct is located in the first device.

For example, the IP address of the network card where the Wi-Fi Direct is located in the first device is 192.168.13.2, in the locally stored routing table, the next-hop address of the default route is originally 192.168.123.254, and the second device may modify the next-hop address from 192.168.123.254 to 192.168.13.2.

In still another implementation, the step of adjusting the second network connection relationship by the second device based on the data transmission mode when the determined data transmission mode is the predetermined transmission mode (the foregoing step S503) further includes: cutting off the signal connection with the second access point when the determined data transmission mode is the first local area network transmission; and establishing a wireless connection with the first access point.

In the implementation, the wireless access point to which the second device is currently connected is the second access point, and the determined data transmission mode is the first local area network transmission (the local area network transmission based on the first access point). Therefore, the second device needs to adjust a signal connection thereof (the second network connection relationship), to facilitate subsequent data transmission through the determined data transmission mode.

In an example, when pre-storing the security authentication information of the first access point, the second device establishes the signal connection with the first access point based on the pre-stored security authentication information of the first access point. For the manner in which the second device pre-stores the security authentication information of the first access point, reference may be made to detailed descriptions in the foregoing embodiment, and details are not described herein again.

In another example, when the security authentication information of the first access point is not stored, the second device establishes a Bluetooth wireless connection with the first device, and obtains the security authentication information of the first access point from the first device through the Bluetooth wireless connection; and then establishes a signal connection with the first access point based on the obtained security authentication information of the first access point.

Step S504: The second device sends a data transmission response to the first device based on the determined data transmission mode.

The data transmission response includes the determined data transmission mode. For example, the data transmission response includes any one of the following: indication information for performing the first Wi-Fi Direct transmission; indication information for performing the second Wi-Fi Direct transmission; and indication information for performing the local area network transmission, and an access point identifier of the corresponding target access point.

Step S505: The first device determines, based on the data transmission response, whether a first network connection relationship needs to be adjusted.

The first network connection relationship is used to indicate a signal connection relationship between the first device and a plurality of other devices, for example, a signal connection relationship between the first device and the first access point, a signal connection relationship between the first device and the second access point, and a signal connection relationship between the first device and the second device. Adjustment modes include modes such as releasing a connection and establishing a new connection.

In an implementation, the step in which the first device determines, based on the data transmission response, whether a first network connection relationship needs to be adjusted (the foregoing step S504) includes: The first device determines that the first network connection relationship needs to be adjusted when the data transmission response indicates that the data transmission mode is the Wi-Fi Direct transmission (the first Wi-Fi Direct transmission or the second Wi-Fi Direct transmission).

In the implementation, when the data transmission response indicates that the data transmission mode is the Wi-Fi Direct transmission, the first device needs to establish Wi-Fi Direct with the second device. Therefore, the first device needs to adjust the first network connection relationship.

In another implementation, the step in which the first device determines, based on the data transmission response, whether a first network connection relationship needs to be adjusted (the foregoing step S504) further includes: The first device determines that the first network connection relationship does not need to be adjusted when the data transmission response indicates that the data transmission mode is the local area network transmission, and the corresponding target access point is the same as the first access point. The first device needs to adjust the first network connection relationship when the data transmission response indicates that the data transmission mode is the local area network transmission, and the corresponding target access point is different from the first access point.

In the implementation, when the data transmission response indicates that the data transmission mode is the local area network transmission, and the corresponding target access point is the same as the first access point, it indicates that subsequent data transmission is performed based on the first access point. Therefore, the first device does not need to adjust the currently accessed wireless access point, that is, determines that the first network connection relationship does not need to be adjusted. When the data transmission response indicates that the data transmission mode is the local area network transmission, and the corresponding target access point is different from the first access point, to implement the wireless local area network transmission, the first device needs to access the target access point. Therefore, the first device determines that the first network connection relationship needs to be adjusted.

In this embodiment of this application, when the first device determines that the first network connection relationship does not need to be adjusted, the first device performs the following step S507. When determining that the first network connection relationship needs to be adjusted, the first device performs the following step S506 to step S507.

Step S506: The first device adjusts the first network connection relationship to a network connection matching the data transmission mode when determining that the signal connection needs to be adjusted.

In an implementation, the step in which the first device adjusts the first network connection relationship to the network connection corresponding to the data transmission mode (the foregoing step S506) includes: The first device establishes Wi-Fi Direct with the second device when the data transmission response indicates that the data transmission mode is the first Wi-Fi Direct transmission.

The Wi-Fi Direct is a data connection between the first device and the second device, and an operating channel of the Wi-Fi Direct is a first channel. In some examples, the first device and the second device may establish Wi-Fi Direct on a channel 149 of a 5G band.

In this embodiment of this application, for detailed steps of establishing Wi-Fi Direct between the first device and the second device, reference may be made to descriptions of establishing Wi-Fi Direct between devices in the related art, and details are not described herein.

In another implementation, the step in which the first device adjusts the first network connection relationship to the network connection corresponding to the data transmission mode (the foregoing step S506) includes: When the data transmission response indicates that the data transmission mode is the second Wi-Fi Direct transmission, the wireless connection (the first signal connection) with the first access point is cut off. A wireless connection (a fourth signal connection) with the second access point is established when the security authentication information of the second access point is pre-stored, and the Wi-Fi Direct is established with the second device. The first device accesses the Internet through the fourth signal connection, and the Wi-Fi Direct is a data connection between the first device and the second device. The operating channel of the Wi-Fi Direct is the second channel.

In some examples, the first device and the second device may establish Wi-Fi Direct on a channel 149 of a 5G band.

In still another implementation, the step in which the first device adjusts the first network connection relationship to the signal connection corresponding to the data transmission mode (the foregoing step S506) includes: When the data transmission response indicates that the data transmission mode is the second Wi-Fi Direct transmission, the wireless connection (the first signal connection) with the first access point is cut off. When the security authentication information of the second access point is not stored, the locally stored routing table is modified to realize the Internet access through the second device, and Wi-Fi direct is established with the second device. The Wi-Fi Direct is a data connection between the first device and the second device, and an operating channel of the Wi-Fi Direct is a second channel.

In some examples, the first device and the second device may establish Wi-Fi Direct on a channel 149 of a 5G band.

In yet another implementation, the step in which the first device adjusts the first network connection relationship to the signal connection corresponding to the data transmission mode (the foregoing step S506) further includes: When the data transmission response indicates that the data transmission mode is the local area network transmission and the corresponding target access point is different from the first access point, the signal connection with the first access point (the first signal connection) is cut off, and a wireless connection (the fourth signal connection) is established with the second access point. Paths of data connection between the first device and the second device are the fourth signal connection and the second signal connection.

In the implementation, the corresponding target access point is different from the first access point, which indicates that the target access point is the second access point to which the second device is connected. Therefore, the first device cuts off the signal connection with the first access point, and establishes the signal connection with the second access point, to facilitate subsequent data transmission through the determined data transmission mode.

Step S507: The first device performs service data interaction with the second device based on a data transmission mode indicated by the data transmission response.

In an implementation scenario, for example, a scenario of wireless screen projection, the first device performs screen projection data interaction with the second device based on the data transmission mode indicated by the data transmission response, to implement wireless screen projection from the first device to the second device.

In an example, when the data transmission mode indicated by the data transmission response is the Wi-Fi Direct transmission, the first device and the second device may perform data interaction through a Wi-Fi Direct channel.

In another example, when the data transmission mode indicated by the data transmission response is the local area network transmission, the first device may send the service data to a connected wireless access point, and the wireless access point forwards the service data to the second device, and may further receive, through the wireless access point, data sent by the second device, to implement data interaction.

In this embodiment of this application, it may be learned from the foregoing step S501 to step S507 that when receiving a data transmission request of a peer device (the first device), an electronic device (the second device) may determine an appropriate data transmission mode through an operating channel of a wireless access point connected to the electronic device and an operating channel of the wireless access point connected to which the peer device, so as to establish an appropriate data connection, to prevent the first device and the second device from performing data transmission in the co-frequency and different-channel operating mode, thereby implementing efficient data transmission between electronic devices and enhancing terminal usage experience of the user. In this embodiment of this application, the foregoing data transmission method between the electronic devices is described through the following scenario I, scenario II, and scenario III as examples.

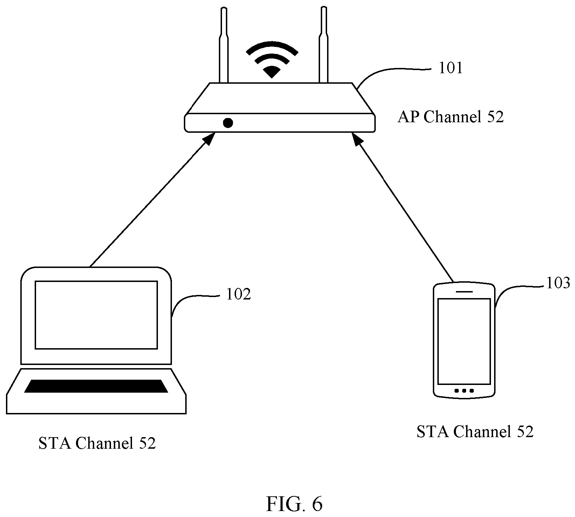

FIG. 6 is a schematic diagram II of a scenario according to an embodiment of this application. FIG. 6 shows a scenario I.

As shown in FIG. 6, the scenario I includes a wireless access point 101, a first device 102, and a second device 103. The wireless access point 101 operates on a restricted channel 52. The first device 102 and the second device 103 are both connected to the wireless access point 101.

In the scenario shown in FIG. 6, the first device 102 generates a data transmission request based on network information (an operating channel is the channel 52) of the wireless access point 101 in response to an interaction instruction, and sends the data transmission request to the second device 103. The second device 103 determines, based on wireless network information (first wireless network information) in the data transmission request in response to the data transmission request, that the first device is connected to an access point operating on the restricted channel, and determines, based on the wireless network information (second wireless network information) stored therein, that the second device is also connected to the access point operating on the restricted channel. Therefore, the second device determines that a data transmission mode is a local area network transmission.

It should be noted that in the scenario I, if data transmission is performed between the first device 102 and the second device 103 by establishing Wi-Fi Direct, as shown in FIG. 1, the first device 102 performs switching between an STA channel (the channel 52) and a P2P channel (the channel 149) during operation, and the second device 103 also performs switching between the STA channel (the channel 52) and the P2P channel (the channel 149) during operation. To be specific, the first device 102 and the second device 103 are both in a co-frequency and different-channel operating mode, which results in degraded Internet access fluency of the first device 102 and the second device 103 and reduced data transmission efficiency between the first device 102 and the second device 103, and then leads to poor terminal usage experience of a user. Therefore, the data transmission cannot be performed between the first device 102 and the second device 103 through the Wi-Fi Direct, but needs to be performed through a local area network.

The second device 103 generates a data transmission response when determining that the data transmission mode is the local area network transmission. The data transmission response includes indication information for performing the local area network transmission and an access point identifier of the corresponding wireless access point 101. The second device 103 sends the data transmission response to the first device 102. The first device 102 receives the data transmission response, determines that the wireless access point connected to the first device is the wireless access point 101, and performs service data interaction with the second device 103 through the local area network based on the wireless access point 101, so that stable data transmission can be implemented between the first device 102 and the second device 103, thereby enhancing the terminal usage experience of the user.

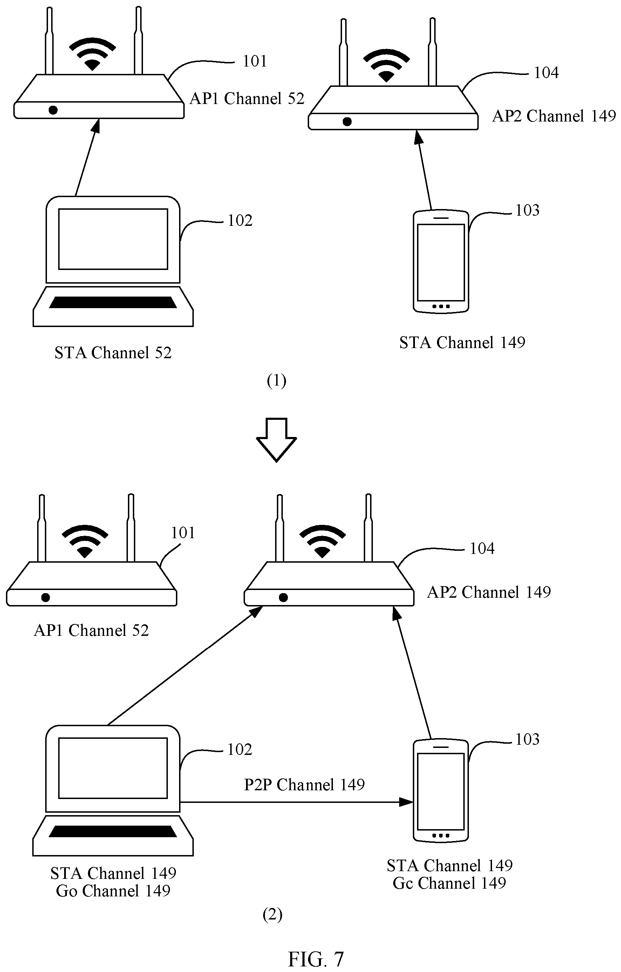

FIG. 7 is a schematic diagram III of a scenario according to an embodiment of this application. (1) in FIG. 7 shows a scenario II.

As shown in (1) in FIG. 7, the scenario II includes a first access point 101, a first device 102, a second device 103, and a second access point 104. The first access point 101 operates on a restricted channel 52. The first device 102 accesses the first access point 101 through a first signal connection. The second access point 104 operates on an unrestricted channel 149. The second device 103 accesses the second access point 104 through a second signal connection.

In the scenario shown in (1) of FIG. 7, the first device 102 generates a data transmission request based on network information (an operating channel is the channel 52) of the first access point 101 in response to an interaction instruction, and sends the data transmission request to the second device 103. The second device 103 determines, based on wireless network information (first wireless network information) in the data transmission request in response to the data transmission request, that the first device is connected to an access point operating on the restricted channel, and determines, based on the wireless network information of the second access point 104 (second wireless network information) stored therein, that the second device is connected to the access point operating on the unrestricted channel. To be specific, one of the first access point 101 and the second access point 104 operates on the unrestricted channel. Therefore, the second device determines that a data transmission mode is a Wi-Fi Direct transmission.

The second device 103 generates a data transmission response when determining that the data transmission mode is the Wi-Fi Direct transmission. The data transmission response includes indication information for performing the Wi-Fi Direct transmission. The second device 103 sends the data transmission response to the first device 102.

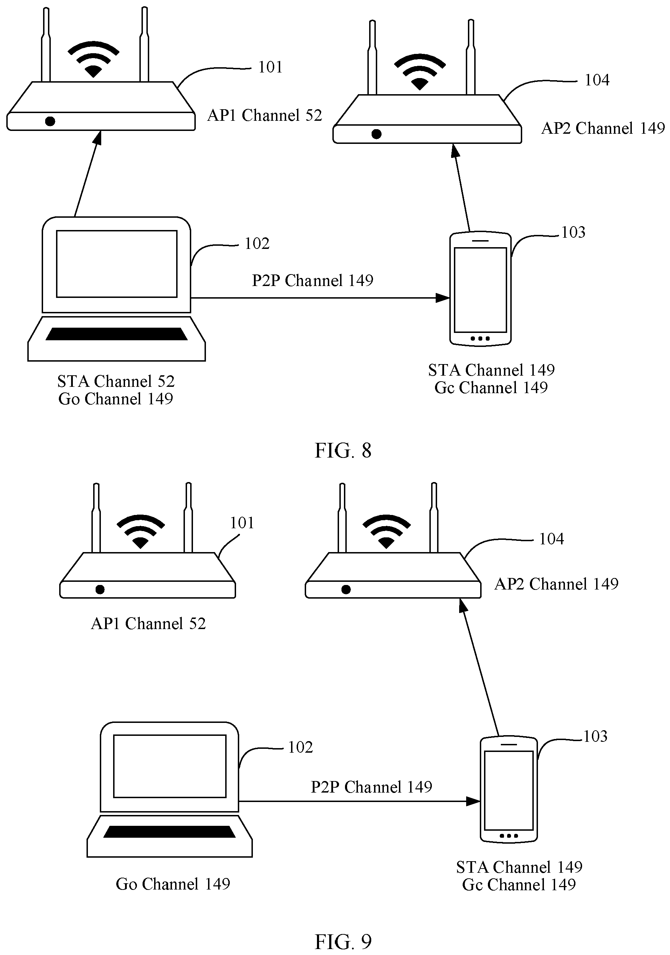

FIG. 8 is a schematic diagram IV of a scenario according to an embodiment of this application. It should be noted that in a scenario II, if a network connection relationship (the first network connection relationship) of the first device 102 is not adjusted, and Wi-Fi Direct with the second device 103 is established, as shown in FIG. 8, the first device 102 performs switching between the STA channel (the channel 52) and the P2P channel (the channel 149) during operation, that is, the first device 102 is in the co-frequency and different-channel operating mode, which results in degraded Internet access fluency of the first device 102 and reduced data transmission efficiency between the first device 102 and the second device 103, and then leads to poor terminal usage experience of a user. Therefore, during the establishment of the Wi-Fi Direct between the first device 102 and the second device 103, another signal connection adjustment further needs to be performed.

In an example, the signal connection adjustment of the first device 102 is shown in (2) of FIG. 7. The first device 102 cuts off a wireless connection (a first signal connection) with the first access point 101, establishes a wireless connection (a fourth signal connection) with the second access point 104 when security authentication information of the second access point 104 is pre-stored, and establishes Wi-Fi Direct of the channel 149 with the second device 103.

In the example, the first device 102 and the second device 103 may both access the Internet through the second access point 104, and the STA channels of the first device 102 and the second device 103 are both the channel 149. The first device 102 and the second device 103 perform service data interaction through a Wi-Fi Direct channel. The P2P channels of the first device 102 and the second device 103 are also the channel 149. It may be seen that the first device 102 and the second device 103 are on the same frequency and the same channel during operation, and do not need to perform channel switching, so that reduced data transmission efficiency caused by the channel switching may be avoided, and efficient data transmission between the first device 102 and the second device 103 can be implemented, thereby enhancing the terminal usage experience of the user.

FIG. 9 is a schematic diagram V of a scenario according to an embodiment of this application. In another example, an adjustment of a network connection relationship (a first network connection relationship) of a first device 102 is shown in FIG. 9. The first device 102 cuts off a wireless connection with a first access point 101, modifies a locally stored routing table when security authentication information of a second access point 104 is not stored, to implement Internet access through the second device 103, and establishes Wi-Fi Direct of a channel 149 with the second device 103.

In the example, the second device 103 is connected to the second access point 104 for Internet access, and an STA channel of the first device 103 is a channel 149. The first device 102 is not connected to a wireless access point, but accesses the Internet through the second device 103. The first device 102 and the second device 103 perform service data interaction through a Wi-Fi Direct channel. P2P channels of the first device 102 and the second device 103 are the channel 149. It may be seen that the first device 102 operates only on the channel 149 and the second device 103 is on a same frequency and a same channel during operation, and the first device 102 and the second device 103 do not need to perform channel switching during operation, so that reduced data transmission efficiency caused by the channel switching may be avoided, and efficient data transmission between the first device 102 and the second device 103 can be implemented, thereby enhancing the terminal usage experience of the user.

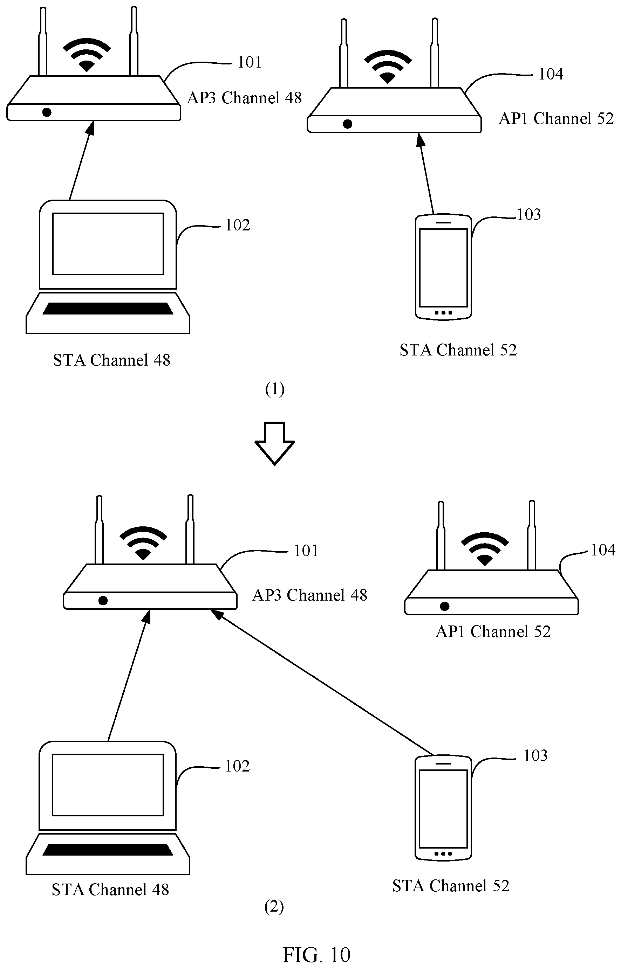

FIG. 10 is a schematic diagram VI of a scenario according to an embodiment of this application. (1) in FIG. 10 shows a scenario III.

As shown in (1) in FIG. 10, the scenario III includes a first access point 101, a first device 102, a second device 103, and a second access point 104. The first access point 101 operates on a restricted channel 48. The first device 102 accesses the first access point 101 through a first signal connection. An STA channel of the first device 102 is the channel 48. The second access point 104 operates on a restricted channel 52. The second device 103 accesses the second access point 104 through a second signal connection. The STA channel of the second device 103 is the channel 52.

In the scenario III shown in (1) of FIG. 10, the first device 102 generates a data transmission request based on network information (an operating channel is the channel 48) of the first access point 101 in response to an interaction instruction, and sends the data transmission request to the second device 103. The second device 103 determines, based on wireless network information (first wireless network information) in the data transmission request in response to the data transmission request, that the first device is connected to an access point operating on the restricted channel, and determines, based on the wireless network information of the second access point 104 (second wireless network information) stored therein, that the second device is connected to the access point operating on the restricted channel. To be specific, the first access point 101 and the second access point 104 both operate on the restricted channel. Therefore, it is determined that a data transmission mode is a local area network transmission.

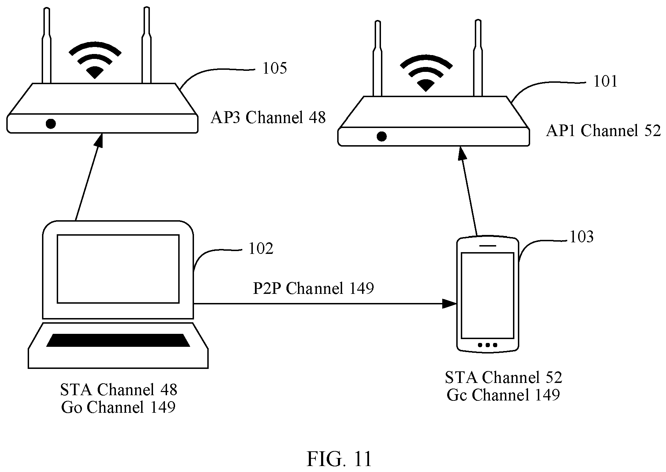

FIG. 11 is a schematic diagram VII of a scenario according to an embodiment of this application. It should be noted that in the scenario III, if data transmission is performed between the first device 102 and the second device 103 by establishing Wi-Fi Direct, as shown in FIG. 11, the first device 102 performs switching between an STA channel (the channel 48) and a P2P channel (the channel 149) during operation, and the second device 103 performs switching between the STA channel (the channel 52) and the P2P channel (the channel 149) during operation. To be specific, the first device 102 and the second device 103 are both in a co-frequency and different-channel operating mode, which results in degraded Internet access fluency of the first device 102 and the second device 103 and reduced data transmission efficiency between the first device 102 and the second device 103, and then leads to poor terminal usage experience of a user. Therefore, the data transmission cannot be performed between the first device 102 and the second device 103 through the Wi-Fi Direct, but needs to be performed through a local area network.

In the scenario III, the first device 102 and the second device 103 are currently connected to different access points, and the first device 102 and the second device 103 need to be connected to a same wireless access point to perform data transmission through a local area network. Therefore, the second device 103 selects one of the first access point 101 and the second access point 104 as the target access point, and the first device 102 and the second device 103 may be connected to the target access point to perform data transmission of the local area network, thereby improving data transmission efficiency and data transmission stability of the current data transmission. For a manner in which the second device 103 selects the target access point, reference may be made to descriptions in the foregoing method. Details are not described herein again.

An example in which the second device 103 selects the first access point 101 as the target access point is used. As shown in (2) in FIG. 10, when the determined data transmission mode is a local area network transmission based on the first access point 101, the second device 103 adjusts a network connection relationship thereof (a second network connection relationship). The second device 103 cuts off a signal connection (a second signal connection) with the second access point 104, and establishes a signal connection (a third signal connection) with the first access point 101. For a manner in which the second device 103 establishes a signal connection with the first access point 101, reference may be made to detailed descriptions in the foregoing method, and details are not described herein again.

In a scenario shown in (2) in FIG. 10, the second device 103 further generates a data transmission response (a third data transmission response). The data transmission response includes indication information for performing the local area network transmission and an access point identifier of the corresponding first access point 101. The second device 103 sends the data transmission response to the first device 102. The first device 102 receives the data transmission response, determines that the wireless access point connected to the first device is the wireless access point 101, and performs service data interaction with the second device 103 through the local area network based on the wireless access point 101. To be specific, the first device 102 sends the service data to the first access point 101 through the first signal connection, and the first access point 101 sends the service data to the second device 103 through the third signal connection, so that stable data transmission can be implemented between the first device 102 and the second device 103, thereby enhancing the terminal usage experience of the user.

It should be noted that the same electronic device may serve as the first device in some scenarios, or may serve as the second device in some other scenarios. This is not limited in this embodiment of this application. For example, in a wireless screen projection scenario, a computer may serve as a first device, and initiate a screen projection data transmission request to a television that serves as a second device. In a multi-screen collaboration scenario, a mobile phone may serve as a first device, and initiate a screen projection data transmission request to a computer that serves as a second device.

In the foregoing data transmission method between electronic devices according to this embodiment of this application, steps performed by the electronic device 200 may also be performed by a chip system included in the electronic device 200. The chip system may include a processor and a Bluetooth chip. The chip system may be coupled to a memory, so that the chip system invokes, when running, a computer program stored in the memory, to implement the steps performed by the foregoing electronic device 200. The processor in the chip system may be an application processor or a non-application processor.

An embodiment further provides a computer-readable medium. The computer-readable medium stores a computer instruction. When the computer instruction runs on an electronic device, the electronic device is enabled to perform the foregoing related method steps to implement the method in the foregoing embodiments.

An embodiment further provides a computer program product. When the computer program product is run on a computer, the computer is caused to perform the foregoing relevant steps, to implement the methods in the foregoing embodiments.

In addition, an embodiment of this application further provides an apparatus. The apparatus may be specifically a chip, a component, or a module. The apparatus may include a processor and a memory that are connected. The memory is configured to store a computer-executable instruction. When the apparatus runs, the processor may execute the computer-executable instruction stored in the memory, to cause the chip to perform the method in the foregoing method embodiments.

The electronic device, the computer-readable medium, the computer program product, or the chip provided in embodiments of this application is configured to perform the corresponding methods provided above. Therefore, for beneficial effect that can be achieved, reference may be made to the beneficial effect of the corresponding method provided above. Details are not described herein again.

Through the descriptions of the foregoing implementations, a person skilled in the art may understand that, for the purpose of convenient and brief description, only division of the foregoing functional modules is used as an example for description. In an actual application, the foregoing functions may be allocated to and completed by different functional modules as required. In other words, an internal structure of an apparatus is divided into different functional modules to complete all or some of the functions described above.

In the several embodiments provided in this application, it should be understood that the disclosed apparatus and method may be implemented in other manners. For example, the described apparatus embodiment is merely an example. For example, the module or unit division is merely logical function division and may be another division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect coupling or communication connection between the apparatuses or units may be implemented in electronic, mechanical, or other forms.

The units described as separate parts may or may not be physically separated. A part displayed as a unit may be one physical unit or a plurality of physical units, located at the one position, or may be distributed to different positions. Some or all of the units may be selected according to actual needs to achieve the objectives of the solutions of embodiments. In addition, functional units in embodiments of this application may be integrated into one processing unit, or each of the units may be physically separated, or two or more units may be integrated into one unit. The foregoing integrated unit may be implemented in a form of hardware, or may be implemented in a form of a software functional unit.

Any content of embodiments of this application and any content of a same embodiment may be freely combined. Any combination of the foregoing content falls within the scope of this application. When the integrated unit is implemented in the form of a software functional unit and sold or used as an independent product, the integrated unit may be stored in a readable storage medium. Based on such an understanding, the technical solutions in embodiments of this application essentially, or the part contributing to the prior art, or all or some of the technical solutions may be implemented in a form of a software product. The software product is stored in a storage medium and includes instructions for enabling a device (which may be a single-chip microcomputer, a chip, or the like) or a processor (processor) to perform all or some of the steps of the methods described in embodiments of this application. The foregoing storage medium includes: various media that can store program code, such as a USB flash drive, a removable hard disk, a read only memory (read only memory, ROM), a random access memory (random access memory, RAM), a magnetic disk, or a compact disc. Although embodiments of this application are described above with reference to the accompanying drawings, this application is not limited to the specific implementations described above. The foregoing specific implementations are illustrative but not restrictive. With the enlightenment of this application, a person of ordinary skill in the art may make many forms without departing from the concept of this application and the protection scope of the claims. These forms fall within the protection of this application.

Steps of the methods or algorithms described in combination with the content disclosed in embodiments of this application may be implemented by hardware, or may be implemented by a processor by executing a software instruction. The software instruction may include a corresponding software module. The software module may be stored in a random access memory (Random Access Memory, RAM), a flash memory, a read only memory (Read Only Memory, ROM), an erasable programmable read only memory (Erasable Programmable ROM, EPROM), an electrically erasable programmable read only memory (Electrically EPROM, EEPROM), a register, a hard disk, a removable hard disk, a compact disc read only memory (CD-ROM), or any other form of storage medium well-known in the art. An example storage medium is coupled to a processor, so that the processor can read information from the storage medium or write information into the storage medium. Certainly, the storage medium may also be a component of the processor. The processor and the storage medium may be located in an application specific integrated circuit (application specific integrated circuit, ASIC).

A person skilled in the art should be aware that in the one or more examples, the functions described in the embodiments of this application may be implemented by hardware, software, firmware, or any combination thereof. When implemented using software, the functions may be stored in the computer-readable medium or transmitted as one or more instructions or code in the computer-readable medium. The computer-readable medium includes a computer-readable medium and a communication medium. The communication medium includes any medium that facilitates transmission of a computer program from one place to another. The storage medium may be any available medium accessible to a general-purpose or special-purpose computer.

Based on the above, the foregoing embodiments are merely intended to describe the technical solutions of this application, and are not intended to limit this application. Although this application is described in detail with reference to the foregoing embodiments, a person of ordinary skill in the art should understand that modifications may still be made to the technical solutions described in the foregoing embodiments, or equivalent substitutions may be made to some of the technical features. However, these modifications or substitutions do not make the essence of the corresponding technical solution depart from the scope of the technical solutions of embodiments of this application.

## Claims

1. A data transmission method, wherein a first device accesses a first access point through a first signal connection, a second device accesses a second access point through a second signal connection, the first access point operates on a first channel, and the second access point operates on a second channel, and the method comprises:
sending, by the first device, a data transmission request to the second device in response to an interaction instruction, wherein the data transmission request is used to request to establish a data connection with the second device, and is used to indicate that the first access point operates on the first channel; and
establishing, by the second device, a data connection with the first device in response to the data transmission request, and cutting off, by the first device or the second device, a signal connection on a different operating channel from the data connection, wherein the data connection operates on a target channel, and the target channel is the first channel or the second channel;
a path of the data connection comprises any one of a first communication path, a second communication path, and a third communication path;
the first communication path comprises the first signal connection and a third signal connection between the first access point and the second device;
the second communication path is a Wi-Fi Direct connection between the first device and the second device; and
the third communication path is a fourth signal connection between the first device and the second access point, and the second signal connection.

2. The method according to claim 1, wherein the establishing, by the second device, a data connection with the first device in response to the data transmission request, and cutting off, by the first device or the second device, a signal connection on a different operating channel from the data connection comprises:
determining, by the second device in response to the data transmission request, that a data transmission mode is a first Wi-Fi Direct transmission when the first channel is an unrestricted channel and the second channel is a restricted channel;
sending, by the second device, a first data transmission response to the first device based on the data transmission mode, wherein the first data transmission response is used to indicate that the data transmission mode is the first Wi-Fi Direct transmission;
cutting off, by the second device, the second signal connection; and
establishing, by the first device in response to the first data transmission response, Wi-Fi Direct with the second device to serve as a path of the data connection, wherein the data connection operates on the first channel.

3. The method according to claim 2, wherein before the cutting off, by the second device, the second signal connection, the method further comprises:
obtaining, by the second device when the second device and the first device are configured with a unified authentication account, security authentication information of the first access point through a cloud platform corresponding to the unified authentication account, wherein the security authentication information of the first access point in the cloud platform is uploaded by the first device.

4. The method according to claim 3, wherein after the cutting off, by the second device, the second signal connection, the method further comprises:
establishing, by the second device, a third signal connection with the first access point when the security authentication information of the first access point is pre-stored, wherein the second device accesses the Internet through the third signal connection.

5. The method according to claim 3, wherein after the cutting off, by the second device, the second signal connection, the method further comprises:
modifying, by the second device, a locally stored routing table when the security authentication information of the first access point is not pre-stored, to access the Internet through the first device.

6. The method according to claim 5, wherein the modifying, by the second device, a locally stored routing table when the security authentication information of the first access point is not pre-stored comprises:
modifying, by the second device, a next-hop address of a default route in the locally stored routing table to an IP address of a network card where the Wi-Fi Direct is located in the first device.

7. The method according to claim 3, wherein after the cutting off, by the second device, the second signal connection, the method further comprises:
establishing, by the second device, a Bluetooth wireless connection with the first device when the security authentication information of the first access point is not pre-stored;
obtaining, by the second device, the security authentication information of the first access point from the first device through the Bluetooth wireless connection; and
establishing, by the second device, a third signal connection with the second access point based on the security authentication information of the first access point.

8. The method according to claim 1, wherein the establishing, by the second device, a data connection with the first device in response to the data transmission request, and cutting off, by the first device or the second device, a signal connection on a different operating channel from the data connection further comprises:
determining, by the second device in response to the data transmission request, that a data transmission mode is a second Wi-Fi Direct transmission when the first channel is a restricted channel and the second channel is an unrestricted channel;
sending, by the second device, a second data transmission response to the first device based on the data transmission mode, wherein the second data transmission response is used to indicate that the data transmission mode is the second Wi-Fi Direct transmission; and
establishing, by the first device in response to the second data transmission response, Wi-Fi Direct with the second device to serve as a path of the data connection, and cutting off, by the first device, the first signal connection, wherein the data connection operates on the second channel.

9. The method according to claim 8, wherein before the cutting off, by the first device, the first signal connection, the method further comprises:
obtaining, by the first device when the first device and the second device are configured with a unified authentication account, security authentication information of the second access point through a cloud platform corresponding to the unified authentication account, wherein the security authentication information of the second access point in the cloud platform is uploaded by the second device.

10. The method according to claim 9, wherein after the cutting off, by the first device, the first signal connection, the method further comprises:
establishing, by the first device, a fourth signal connection with the second access point when the security authentication information of the second access point is pre-stored, wherein the first device accesses the Internet through the fourth signal connection.

11. The method according to claim 8, wherein after the cutting off, by the second device, the second signal connection, the method further comprises:
modifying, by the first device, a locally stored routing table when the security authentication information of the second access point is not pre-stored, to access the Internet through the second device.

12. The method according to claim 11, wherein the modifying, by the first device, a locally stored routing table when the security authentication information of the second access point is not pre-stored comprises:
modifying, by the first device, a next-hop address of a default route in the locally stored routing table to an IP address of a network card where the Wi-Fi Direct is located in the second device.

13. The method according to claim 1, wherein the establishing, by the second device, a data connection with the first device in response to the data transmission request, and cutting off, by the first device or the second device, a signal connection on a different operating channel from the data connection further comprises:
selecting, by the second device, a target access point from the first access point and the second access point in response to the data transmission request when the first channel and the second channel are both restricted channels and the first access point and the second access point are indicated as different access points, wherein the target access point is indicated as the first access point or the second access point;
determining, by the second device, that the data transmission mode is a local area network transmission based on the target access point;
sending, by the second device, a third data transmission response to the first device based on the data transmission mode when the target access point is the first access point, wherein the third data transmission response is used to indicate that the data transmission mode is the local area network transmission based on the first access point; and
cutting off, by the second device, the second signal connection, and establishing, by the second device, the third signal connection with the first access point, wherein the first signal connection and the third signal connection serve as paths of the data connection.

14. The method according to claim 13, wherein the establishing, by the second device, a data connection with the first device in response to the data transmission request, and cutting off, by the first device or the second device, a signal connection on a different operating channel from the data connection further comprises:
sending, by the second device, a fourth data transmission response to the first device based on the data transmission mode when the target access point is the second access point, wherein the fourth data transmission response is used to indicate that the data transmission mode is the local area network transmission based on the second access point; and
cutting off, by the first device, the first signal connection in response to the fourth data transmission response, and establishing a fourth signal connection with the second access point, wherein the second signal connection and the fourth signal connection serve as the paths of the data connection.

15. The method according to claim 13, wherein the data transmission request is further used to indicate a bandwidth, a transmission rate, and a signal-to-noise ratio of the first access point, and the selecting, by the second device, a target access point from the first access point and the second access point comprises:
comparing the bandwidth of the first access point with a bandwidth of the second access point, and using an access point with a larger bandwidth as the target access point;
comparing the transmission rate of the first access point with a transmission rate of the second access point when the bandwidths are the same, and using an access point with a larger transmission rate as the target access point; and
comparing the signal-to-noise ratio of the first access point with a signal-to-noise ratio of the second access point when the transmission rates are the same, and using an access point with a larger signal-to-noise ratio as the target access point.

16. The method according to claim 1, wherein after the establishing, by the second device, a data connection with the first device in response to the data transmission request, and cutting off, by the first device or the second device, a signal connection on a different operating channel from the data connection, the method further comprises:
performing, by the first device and the second device, data interaction through the data connection.

17. An electronic device, comprising:
one or more processors;
a memory; and
a computer program, wherein the computer program is stored in the memory, and when the computer program is executed by the one or more processors, the electronic device is enabled to perform the data transmission method according to any one of claims 1 to 16.

18. A computer storage medium, comprising a computer instruction, the computer instruction, when run on an electronic device, causing the electronic device to perform the data transmission method according to any one of claims 1 to 16.
